# EUROPÄISCHE PATENTSCHRIFT

(11) **EP 2 603 776 B1**
(45) Veröffentlichungstag und Bekanntmachung des Hinweises auf die Patenterteilung: **16.11.2016**
(21) Anmeldenummer: 11738223.4
(22) Anmeldetag: 29.07.2011
(51) Int. Cl.: G01D 5/48, G01D 11/24, G01B 7/02, G01B 7/14

(54) **WEGMESSVORRICHTUNG**
DISPLACEMENT MEASURING DEVICE
DISPOSITIF DE MESURE DE DÉPLACEMENT

(30) Priorität: 09.08.2010 DE 102010039055
(43) Veröffentlichungstag der Anmeldung: 19.06.2013
(73) Patentinhaber: Balluff GmbH, 73765 Neuhausen (DE)
(72) Erfinder: ZERN, Achim, 74080 Heilbronn (DE); ECKEL, Gerd, 73240 Wendlingen (DE)
(74) Vertreter: Hoeger, Stellrecht & Partner Patentanwälte mbB
(86) Internationale Anmeldenummer: PCT/EP2011/063099
(87) Internationale Veröffentlichungsnummer: WO 2012/019927

(56) Entgegenhaltungen:
- WO-A2-2005/100907
- DE-A1- 10 201 880
- DE-A1- 19 548 138
- DE-A1-102004 062 968
- US-A1- 2001 017 539

## Beschreibung

Die Erfindung betrifft eine Wegmessvorrichtung, umfassend mindestens eine erste Messstrecke und eine zweite Messstrecke, welche jeweils eine Erstreckung in einer Längsrichtung aufweisen und mindestens in einem Messbereich parallel zueinander ausgerichtet sind, mindestens einen Positionsgeber, welcher an die Messstrecken berührungslos koppelt, und einen Messstreckenhalter, welcher sich in dem Messbereich erstreckt und Ausnehmungen aufweist, in welchen jeweils eine Messstrecke angeordnet ist

Aus der EP 1 306 650 A1 ist eine Wegaufnehmervorrichtung zur Erfassung des Wegs eines Positionsgebers bekannt, welche einen sich in einer Längsrichtung erstreckenden Messfühler aufweist, an welchen der Positionsgeber berührungslos koppelt.

Wenn eine Mehrzahl (mindestens zwei) von Messstrecken, das heißt mindestens zwei Messfühler vorgesehen sind, dann lässt sich eine redundante Wegmessung bzw. Positionsbestimmung erreichen. Eine entsprechende Wegmessvorrichtung lässt sich auf vorteilhafte Weise beispielsweise bei sicherheitsrelevanten Anwendungen einsetzen.

Aus der DE 10 2004 062 968 A1 ist eine Wegmessvorrichtung mit einem Gehäuse in Form eines eigenstabilen, hohlen, umfänglich geschlossenen, stirnseitig dichtbaren Profiles mit in Längsrichtung gleich bleibender Querschnittskontur, einer Wellenleiter-Einheit im Inneren des Profiles, wobei der Wellenleiter der Wellenleiter-Einheit in Längsrichtung des Profiles verläuft, einer Auswerte-Elektronik, und einem in Längsrichtung außen entlang des Profiles beweglichen Magneten als Positionsgeber bekannt. Das Profil weist über die gesamte Länge eine absatzlose Innenkontur auf und in der Innenkontur ist wenigstens ein Einsatz mit einer Innenkontur drehfest in Drehrichtung um die Längsachse angeordnet, die auch beliebige Innenecken, Außenecken und/oder Absätze aufweist.

Aus der US 2001/0017539 A1 ist eine modulare Wellenleiteranordnung bekannt.

Aus der CN 101788259 ist ein magnetostriktiver Verrückungssensor bekannt, welcher zwei Sätze von Signalerzeugungseinrichtungen umfasst. Jeder Satz umfasst einen Wellenleiterdraht.

Aus der DE 197 53 805 A1 ist eine Lagerung für Wellenleiter, die der Fortleitung mechanischer Wellen dienen, bekannt, wobei die Lagerung einen hohen Anteil Gas und einen niedrigen Anteil Feststoff aufweist.

Aus der US 4,121,155 ist ein Positionsbestimmungs-System bekannt.

Aus der WO 2005/100907 A2 ist eine Wegmessvorrichtung mit einem langgestreckten Gehäuse und einer Wellenleiter-Einheit bekannt.

Aus der DE 102 01 880 A1 ist ein magnetostriktiver Wegsensor mit einem Sensor-Element und einem Schutzprofil bekannt.

Aus der DE 195 48 138 A1 ist ein Neutralpositions-Anzeiger für eine Steuerung vom Joystick-Typ bekannt.

Der Erfindung liegt die Aufgabe zugrunde, eine Wegmessvorrichtung der eingangs genannten Art bereitzustellen, welche mit geringen Abmessungen realisierbar ist.

Diese Aufgabe wird bei der eingangs genannten Wegmessvorrichtung erfindungsgemäß dadurch gelöst, dass der Messstreckenhalter bezogen auf seinen Querschnitt T-förmige Elemente aufweist, zwischen welchen die Ausnehmungen gebildet sind.

An dem Messstreckenhalter lassen sich mit geringem Platzbedarf eine Mehrzahl von Messstrecken wie beispielsweise zwei Messstrecken oder drei Messstrecken unterbringen.

Es lässt sich dadurch eine redundante Wegmessvorrichtung realisieren, welche bezüglich eines Wegaufnehmers, welche den Messstreckenhalter umfasst, die gleiche oder ähnliche Abmessungen wie eine Wegmessvorrichtung mit einer einzigen Messstrecke hat.

In dem Messstreckenhalter lassen sich die Messstrecken definiert mit guter Schockresistenz und geringer Schwingungsanfälligkeit lagern.

Der Messstreckenhalter weist bezogen auf seinen Querschnitt T-förmige Elemente auf, zwischen welchen die Ausnehmungen gebildet sind. Es lassen sich dadurch Wände zwischen den Ausnehmungen herstellen, welche eine gleichmäßige Wanddicke aufweisen. Ferner lassen sich Bereiche bereitstellen, welche die jeweiligen Messstrecken überlappen und diese dadurch sicher an dem Messstreckenhalter fixieren.

Bei einem Ausführungsbeispiel ist mindestens eine dritte Messstrecke vorgesehen. Dadurch wird eine mehrfach redundante Wegmessvorrichtung, nämlich eine dreifache redundante Wegmessvorrichtung bereitgestellt.

Bei einer Ausführungsform umfasst eine Messstrecke einen Wellenleiter und insbesondere Drahtwellenleiter. Durch Ermittlung einer Wellenlaufzeit lässt sich die Position des Positionsgebers und damit eine Wegstrecke ermitteln.

Ganz besonders vorteilhaft ist es, wenn der Wellenleiter in einem Schlauch und insbesondere Silikonschlauch angeordnet ist. Der Schlauch ist vorzugsweise aus einem elektrisch isolierenden Material hergestellt. Dadurch lässt sich eine elektrische Isolierung der individuellen Messstrecken erreichen. Weiterhin dient der Schlauch zur Lagerung der Messstrecken an dem Messstreckenhalter. Durch eine definierte Lagerung mit hoher Schockresistenz (ohne Repositionierung der Wellenleiter) ergibt sich eine gute Linearität für die Messstrecken, das heißt es ergeben sich geringe Abstandsänderungen zwischen dem Positionsgeber und dem Wellenleiter über die gesamte Länge des Messbereichs.

Günstig ist es, wenn an beabstandeten Stellen der Schlauch eingeschnürt ist und beispielsweise an dem Wellenleiter anliegt. Dadurch wird eine relative Fixierung zwischen dem Wellenleiter und dem Schlauch erreicht. Der Wellenleiter ist dadurch bezüglich des Schlauchs fixiert. Die Fixierung ist insbesondere eine Lagerung des Wellenleiters am Schlauch mit Spiel, wobei das Spiel definiert ist und von geringem Umfang ist. Über den Schlauch wiederum lässt sich dann der Wellenleiter an dem Messstreckenhalter lagern.

Ganz besonders vorteilhaft ist es, wenn der Messstreckenhalter aus einem faserverstärkten Material und insbesondere glasfaserverstärkten Material und vorzugsweise glasfaserverstärkten Kunststoffmaterial hergestellt ist. Durch die Verwendung eines faserverstärkten Materials weist der Messstreckenhalter einen geringen Wärmeausdehnungskoeffizient auf. Dadurch lassen sich Zwangskräfte auf die Messstrecken minimieren. Weiterhin lässt sich dadurch der Messstreckenhalter auf einfache Weise aus einem elektrisch isolierenden Material herstellen, sodass auf einfache Weise für eine elektrische Isolierung der Messstrecken gesorgt wird.

Insbesondere ist dann eine Faserorientierung mindestens näherungsweise parallel zu einer Längsrichtung einer Messstrecke.

Vorteilhaft ist es, wenn die Ausnehmungen am Messstreckenhalter rotationssymmetrisch zu einer Längsachse des Messstreckenhalters verteilt angeordnet sind. Dadurch lässt sich ein maximaler Abstand zwischen den Messstrecken erreichen, um die gegenseitige Beeinflussung zu minimieren. Wenn der Positionsgeber symmetrisch angeordnet und ausgebildet ist, dann lässt sich auf einfache Weise erreichen, dass alle Messstrecken auf die gleiche Art und Weise und gleichzeitig an dem Positionsgeber koppeln, um eine hohe Redundanz zu erreichen.

Günstig ist es, wenn eine Ausnehmung an dem Messstreckenhalter seitlich offen ist. Dadurch lässt sich bei der Herstellung der Wegaufnehmervorrichtung eine Messstrecke auf einfache Weise in den Messstreckenhalter einlegen.

Günstig ist es, wenn eine Messstrecke in einer Ausnehmung in einem Winkel von mindestens 220° und vorzugsweise in einem Winkel von mindestens näherungsweise 270° von Wandmaterial der Ausnehmung umgeben ist. Dadurch lässt sich eine Messstrecke auf einfachere und sichere Weise, insbesondere in Kombination mit einer Lagerung eines Wellenleiters in einem Schlauch, an dem Messstreckenhalter fixieren.

Es ist dabei eine Messstrecke über ihre gesamte Länge im Messbereich von dem Messstreckenhalter aufgenommen. Dadurch erhält man eine definierte Ausrichtung der Messstrecke über die gesamte Länge des Messbereichs mit hoher Schockstabilität.

Beispielsweise weist der Messstreckenhalter eine zylindrische Außenkontur auf. Dadurch lassen sich geringe Außenabmessungen erreichen.

Beispielsweise beträgt eine maximale Dicke des Messstreckenhalters höchstens 10 mm. Ein entsprechender Messstreckenhalter lässt sich beispielsweise durch ein Pultrusionsverfahren herstellen. Es lässt sich dadurch eine mehrfache und beispielsweise dreifache redundante Wegmessvorrichtung auf einfache Weise mit geringem Bauraum herstellen.

Insbesondere sind die T-förmigen Elemente sternförmig angeordnet. Dadurch erhält man eine hohe Symmetrie für den Messstreckenhalter und damit für die Anordnung der Messstrecken.

Bei einer Ausführungsform weist eine Ausnehmung einen ersten Bereich auf, in welchem begrenzende Wände mindestens näherungsweise eine ebene Seite haben. Dadurch lässt es sich realisieren, dass diese begrenzenden Wände eine gleichmäßige Wanddicke aufweisen. Entsprechend ist die Herstellung des Messstreckenhalters vereinfacht.

Es ist ferner günstig, wenn eine Ausnehmung einen zweiten Bereich aufweist, in welchem die Ausnehmung begrenzende Wände abgerundet sind. Dadurch lässt sich ein "Überlappbereich" bereitstellen, in welchem eine Messstrecke von Material des Messstreckenhalters (eventuell bis auf eine seitliche Öffnung) umgeben ist.

Ganz besonders vorteilhaft ist es, wenn der Messstreckenhalter einen zentralen Bereich aufweist, in welchem die Ausnehmungen begrenzende Wände eine gleichmäßige Wanddicke haben. Dadurch lässt sich auf einfache Weise ein mechanisch stabiler Messstreckenhalter bereitstellen, welcher eine Mehrzahl von Messstrecken aufnehmen kann und dabei minimierte Abmessungen aufweist.

Insbesondere beträgt eine Messbereichslänge der Messstrecken mindestens 2 cm und insbesondere 2,5 cm, das heißt die Position eines Positionsgebers lässt sich in diesem Längenbereich feststellen.

Die Messstrecken sind insbesondere unabhängig voneinander und koppeln gleichzeitig an den gleichen mindestens einen Positionsgeber an, um eine hohe Redundanz zu erreichen.

Es ist ferner günstig, wenn ein Messkopf vorgesehen ist, an welchem der Messstreckenhalter angeordnet ist und insbesondere koaxial angeordnet ist. In dem Messkopf lässt sich eine sensorische Einrichtung der Wegmessvorrichtung positionieren. Diese umfasst insbesondere Spulen. Es sind auch andere sensorische Elemente wie Piezoelemente, Hall-Elemente oder magnetostriktive Elemente möglich.

Die Messstrecken weisen jeweils eine Fortsetzung in den Messkopf auf. Insbesondere ist ein Wellenleiter eventuell mit umgebendem Schlauch ohne Unterbrechung in den Messkopf geführt.

Der Messkopf weist vorteilhafterweise größere Querschnittsabmessungen auf als der Messstreckenhalter. Dadurch lassen sich sensorische Elemente und insbesondere Pick-Up-Spulen in dem Messkopf in einem größeren Abstand voneinander positionieren, um ein Übersprechen zu reduzieren. Ferner lässt sich der Messkopf dann beispielsweise auch zur Fixierung der Wegmessvorrichtung an einer Anwendung nutzen.

Vorteilhafterweise ist an dem Messkopf eine Halteeinrichtung zur Fixierung der Wegmessvorrichtung an einer Anwendung angeordnet. Die Halteeinrichtung umfasst dabei insbesondere eine Halteplatte, welche an dem Messkopf fixiert ist. Über die Halteplatte wiederum lässt sich die Wegmessvorrichtung an einer Anwendung befestigen.

Bei einer Ausführungsform ist an dem Messkopf eine Spuleneinrichtung angeordnet, wobei jeder Messstrecke jeweils mindestens eine Pick-Up-Spule zugeordnet ist. Die Pick-Up-Spule bildet einen Signalwandler, welcher durch Umkehrung des magnetostriktiven Effekts infolge magnetischer Induktion ein elektrisches Signal erzeugt, welches dann auswertbar ist. In diesem elektrischen Signal ist Information über die Position des Positionsgebers enthalten.

Es ist dabei ein Bereich einer Fortsetzung der Messstrecke in dem Messkopf, welcher an die Spuleneinrichtung gekoppelt ist, nach außen versetzt zu einer Längsachse des Messstreckenhalters positioniert. Dadurch lässt sich der Abstand zwischen den Pick-Up-Spulen für die jeweiligen Messstrecken maximieren und dadurch lässt sich wiederum das Übersprechen reduzieren.

In diesem Bereich der Fortsetzung ist insbesondere eine mindestens näherungsweise lineare Ausrichtung vorgesehen, um eine effektive Kopplung zwischen einem Wellenleiter und einer Pick-Up-Spule zu erreichen. Unterschiedliche Fortsetzungen sind in diesen Bereichen insbesondere parallel zueinander orientiert.

Es ist dabei günstig, wenn die Fortsetzung der Messstrecke einen Übergangsbereich zwischen dem Messstreckenhalter und der Spuleneinrichtung aufweist und insbesondere die Fortsetzung im Übergangsbereich gebogen geführt ist. Dadurch wird die Wellenleitung minimal beeinflusst.

Es ist ferner günstig, wenn die Pick-Up-Spulen, welche den jeweiligen Messstrecken zugeordnet sind, rotationssymmetrisch zu einer Achse des Messkopfs verteilt angeordnet sind. Dadurch weisen Pick-Up-Spulen, welche unterschiedlichen Messstrecken zugeordnet sind, einen maximalen Abstand auf und die Gefahr des Übersprechens ist reduziert.

Ganz besonders vorteilhaft ist es, wenn der mindestens einen Pick-Up-Spule der jeweiligen Messstrecke jeweils mindestens ein Widerstandselement zugeordnet ist. Durch entsprechende Auswahl der Widerstandselemente lassen sich die einzelnen Messinstrumente relativ zueinander normieren und auch zu einer Messschnittstellenelektronik normieren.

Es ist ferner günstig, wenn das mindestens eine Widerstandselement auf einem flexiblen Band angeordnet ist und insbesondere außerhalb des Messkopfs angeordnet ist. Das flexible Band ist insbesondere ein Flex-Band mit entsprechenden Leitern, welches zu einer Messschnittstelle geführt ist. Das flexible Band ist dann auch gleichzeitig Träger für das mindestens eine Widerstandselement.

Bei einer Ausführungsform weist der Messkopf einen Spulenhalter auf, an welchem ein Messstreckenhalter-Träger fixiert ist. Es ergibt sich dadurch ein einfacher mechanischer Aufbau des Messkopfs und der Messstreckenhalter lässt sich auf einfache Weise fixieren.

Insbesondere weist der Messstreckenhalter-Träger eine Markierungseinrichtung und/oder Positioniereinrichtung für den Messstreckenhalter auf. Dadurch lässt sich bei der Herstellung der Wegmessvorrichtung der Messstreckenhalter auf einfache Weise bezüglich dem Messstreckenhalter-Träger und damit auch gegenüber dem Spulenhalter ausrichten.

Es ist dann ferner günstig, wenn dem Messstreckenhalter-Träger und dem Spulenhalter eine Nase-Nut-Einrichtung zur Drehfixierung aneinander zuge ordnet ist. Dadurch lässt sich der Zusammenbau der Wegmessvorrichtung erleichtern.

Günstig ist es, wenn an dem Spulenhalter eine Halteeinrichtungs-Platte fixiert ist. Dadurch lässt sich auf einfache Weise eine Halteeinrichtung zur Fixierung der Wegaufnehmervorrichtung an einer Anwendung bereitstellen.

Es ist dann ferner günstig, wenn der Halteeinrichtungs-Platte und dem Spulenhalter eine Nase-Nut-Einrichtung zur Drehfixierung zugeordnet ist. Dadurch lässt sich auf einfache Weise die Halteeinrichtungs-Platte an dem Spulenhalter bezüglich Drehbarkeit fixieren.

Es ist ferner günstig, wenn eine Riegeleinrichtung vorgesehen ist, welche einen einer jeweiligen Messstrecken-Fortsetzung zugeordneten Riegel umfasst, welcher an einem Spulenhalter angeordnet ist und die Fortsetzung der Messstrecke im Spulenhalter fixiert. Der Spulenhalter muss für die Messstrecken-Fortsetzungen entsprechende Ausnehmungen aufweisen, wobei auch nicht parallel zu einer Achse des Messkopfs bzw. des Messstreckenhalters vorgesehene Ausnehmungen vorhanden sein müssen. Insbesondere ist eine S-förmige Führung der Messstrecke und der Messstrecken-Fortsetzung vorgesehen. Durch das Vorsehen eines Riegels lässt sich eine entsprechende Ausnehmung von seitlich außen herstellen, ohne dass eine Schrägbohrung oder dergleichen vorgesehen werden muss. Über den zugeordneten Riegel wird die Ausnehmung dann geschlossen und es lässt sich dabei gleichzeitig auch eine definierte Positionierung einer Messstrecken-Fortsetzung erreichen.

Es kann dabei vorgesehen sein, dass eine Magneteinrichtung in die Riegeleinrichtung integriert ist. Die Magneteinrichtung stellt einen Bias-Magneten bereit, welcher zur Verringerung des Übersprechens unterschiedlicher Messstrecken aufeinander dient. Es kann dadurch der Einfluss eines Stromimpuls von einer Messstrecke auf die Pick-Up-Spule einer anderen Messstrecke verringert werden. Eine entsprechende Magneteinrichtung lässt sich beispielsweise über einen kunststoffgebundenen Magneten realisieren, welcher gleichzeitig einen Riegel bildet.

Ganz besonders vorteilhaft ist es, wenn die Messstrecken individuell elektrisch isoliert sind. Dadurch lassen sich unabhängige Messstrecken erreichen.

Aus dem gleichen Grund ist es günstig, wenn jeder Messstrecke eine eigene magnetische Abschirmung zugeordnet ist.

Ferner ist es günstig, wenn eine Pick-Up-Spuleneinrichtung, welche einer jeweiligen Messstrecke zugeordnet ist, jeweils eine eigene magnetische Abschirmung aufweist, wobei jede magnetische Abschirmung insbesondere auf einem eigenen Potential liegt. Dadurch lässt sich das Übersprechen minimieren.

Es ist ferner günstig, wenn eine Induktionsspannungs-Begrenzungseinrichtung vorgesehen ist, welche eine Flankensteilheit von Stromimpulsen beim Einschalten und/oder Ausschalten beeinflusst. Insbesondere sorgt die Induktionsspannungs-Begrenzungseinrichtung dafür, dass ein Abfall von der höchsten Amplitude auf Null bei einem Stromimpuls beim Ausschalten in einem Zeitraum von mindestens 1,5 µs und insbesondere von mindestens 2 µs erfolgt. Dadurch werden Induktionsspannungen, welche an anderen Messstrecken bzw. Messstrecken-Fortsetzungen erzeugt werden können, minimiert, und die Gefahr des Übersprechens wird verringert.

Es kann ferner vorgesehen sein, dass in dem Messstreckenhalter mindestens ein zusätzlicher Leiter angeordnet ist. Über diesen zusätzlich geführten Leiter, welcher elektrisch parallel zu entsprechenden Wellenleitern der Messstrecke geführt ist, lässt sich eventuell ein Übersprechen kompensieren. Dies lässt sich durch entsprechende Stromstärke und auch über die Art und Weise der Verlegung des mindestens einen zusätzlichen Leiters erreichen.

Die Wegmessvorrichtung umfasst insbesondere einen magnetostriktiven Wegaufnehmer, beim dem ein von einer Messschnittstelle stammender Erregerstromimpuls eine Messung auslöst. Der Erregerstromimpuls wird mittels eines Startsignals ausgelöst. Der Erregerstromimpuls erzeugt auf einem Wellenleiter ein zirkulares Magnetfeld, welches aufgrund weichmagnetischer Eigenschaften des Wellenleiters in diesem gebündelt wird. An einer Messstelle verlaufen Magnetfeldlinien des Positionsgebers rechtwinklig zum zirkularen Magnetfeld und werden im Wellenleiter gebündelt. In diesem Bereich, in dem sich die Magnetfelder überlagern, entsteht im Mikrobereich des Gefüges des Wellenleiters eine elastische Verformung aufgrund von Magnetostriktion. Diese elastische Verformung bewirkt eine sich längs des Wellenleiters ausbreitende elastische Welle. Eine rücklaufende transsonare Welle bewirkt an einer Pick-Up-Spule durch Umkehrung des magnetostriktiven Effekts und magnetische Induktion ein elektrisches Signal. Die Wellenlaufzeit ist proportional zum Abstand zwischen dem Positionsgeber und der Pick-Up-Spule. Über eine Zeitmessung kann der Abstand zwischen der Pick-Up-Spule und dem Positionsgeber mit hoher Genauigkeit bestimmt werden. Das primäre Messsignal für die Zeitmessung ist der Erregerstromimpuls auf dem Wellenleiter und sein Reaktionsimpuls, welcher zeitversetzt in Abhängigkeit von der Position des Positionsgebers geliefert wird.

Die nachfolgende Beschreibung bevorzugter Ausführungsformen dient im Zusammenhang mit den Zeichnungen der näheren Erläuterung der Erfindung. Es zeigen:
- Figur 1: eine perspektivische Ansicht eines Ausführungsbeispiels einer erfindungsgemäßen Wegmessvorrichtung;
- Figur 2: eine Schnittansicht längs der Linie 2-2 gemäß Figur 1;
- Figur 3: eine perspektivische Teilschnittansicht auf einen Messkopfbereich der Wegmessvorrichtung gemäß Figur 1;
- Figur 4: eine weitere perspektivische Schnittansicht eines Messkopfs;
- Figur 5: eine Teilansicht eines Messstreckenhalters;
- Figur 6: eine perspektivische Schnittansicht längs der Linie 6-6 gemäß Figur 5;
- Figur 7: eine Schnittansicht eines Messstreckenhalters;
- Figur 8: eine ähnliche Ansicht wie Figur 7 mit darin angeordneten Messstrecken (entsprechend einer Schnittansicht längs der Linie 8-8 gemäß Figur 6);
- Figur 9: eine perspektivische Darstellung eines Ausführungsbeispiels eines Messstreckenhalter-Trägers;
- Figur 10: eine perspektivische Ansicht eines Ausführungsbeispiels eines Spulenhalters;
- Figur 11: eine perspektivische Ansicht eines Ausführungsbeispiels einer Halteplatte;
- Figur 12(a): eine schematische Darstellung eines Wellenleiters zur Erläuterung dessen Funktionsweise; und
- Figur 12(b): eine schematische Darstellung eines Stromimpulses.

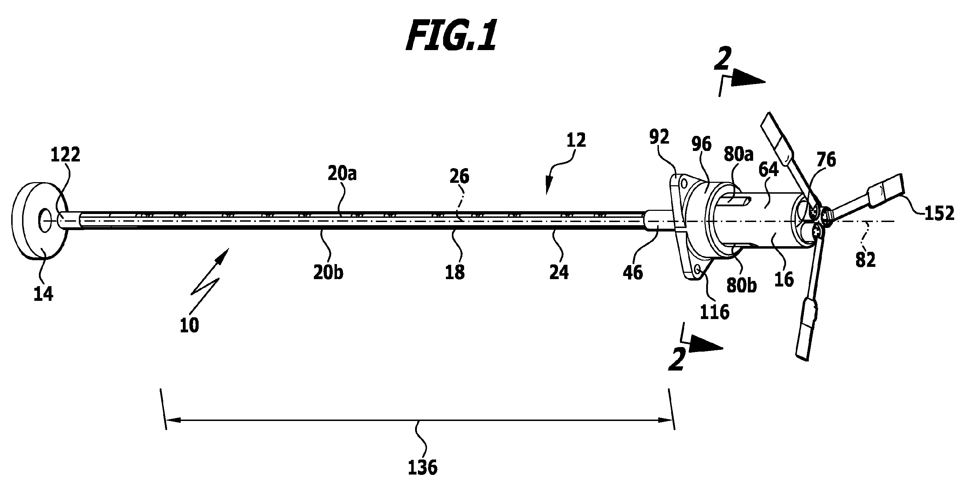

Ein Ausführungsbeispiel einer erfindungsgemäßen Wegmessvorrichtung, welches in Figur 1 gezeigt ist und dort mit 10 bezeichnet ist, umfasst einen Wegaufnehmer 12 und einen Positionsgeber 14. Der Wegaufnehmer 12 ist insbesondere als magnetostriktiver Wegaufnehmer ausgebildet. Der Positionsgeber 14 ist ein Magnet und insbesondere ein Permanentmagnet beispielsweise in Form eines Ringmagnets.

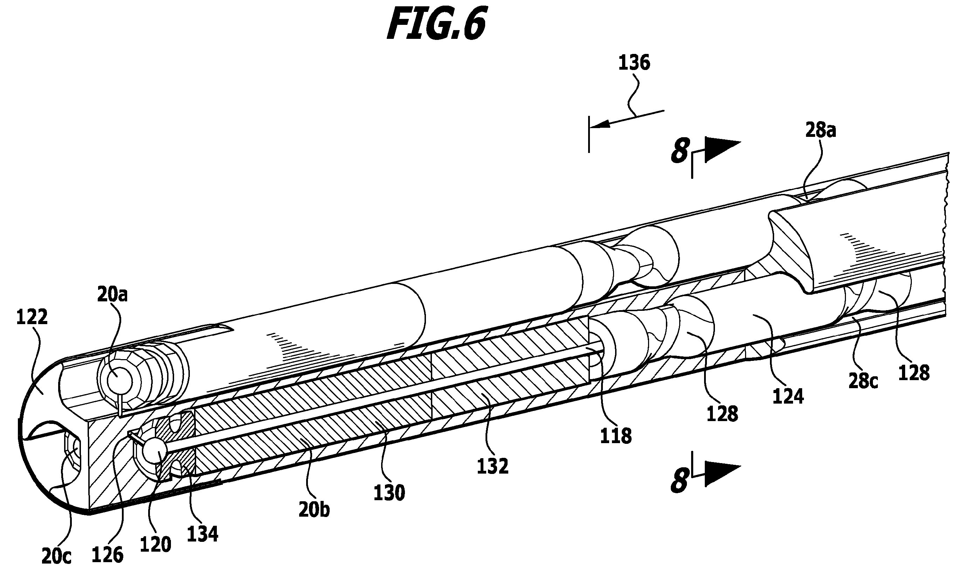

Der Wegaufnehmer 12 umfasst einen Messkopf 16. An dem Messkopf 16 ist eine Wegstreckeneinrichtung 18 gehalten. Die Wegstreckeneinrichtung 18 weist dabei eine Mehrzahl von parallelen Messstrecken 20a, 20b, 20c auf (Figuren 1, 5, 6, 8). Bei dem gezeigten Ausführungsbeispiel sind eine erste Messstrecke 20a, eine zweite Messstrecke 20b und eine dritte Messstrecke 20c vorgesehen. In einem Messbereich sind die Messstrecken 20a, 20b, 20c parallel zueinander ausgerichtet und mit linearer Erstreckung orientiert. Der Positionsgeber 14 koppelt gleichzeitig an die Messstrecken 20a, 20b, 20c. Dadurch lässt sich die Position des Positionsgebers 14 zu dem Wegaufnehmer 12 redundant dreifach über die drei Messstrecken 20a, 20b, 20c unabhängig voneinander ermitteln. Eine solche redundante Positionsermittlung ist vorteilhaft insbesondere für sicherheitsrelevante Anwendungen (wie beispielsweise für die Dampfventilpositionsbestimmung in einem Kernkraftwerk oder für die Ermittlung eines Pitches einer Schiffsschraube).

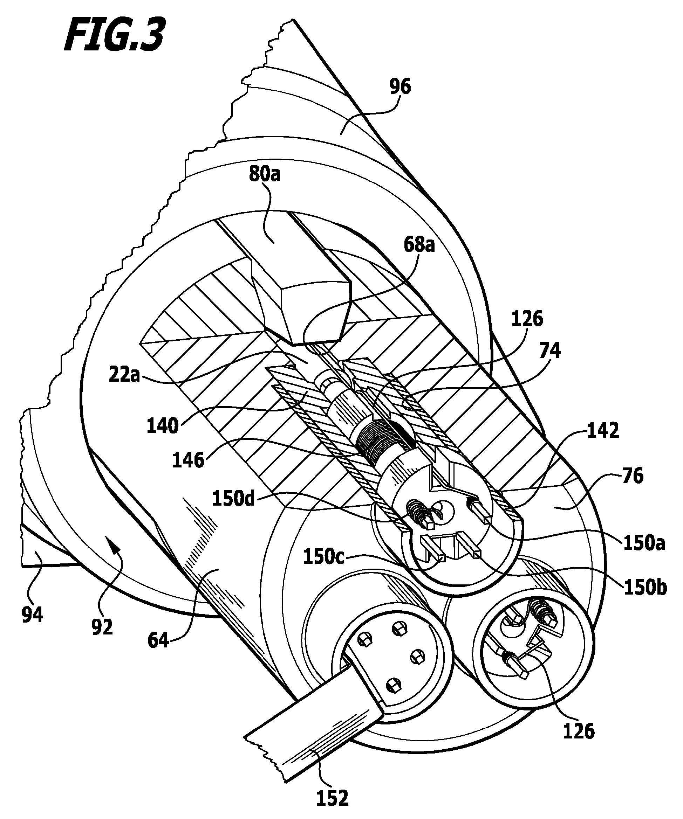

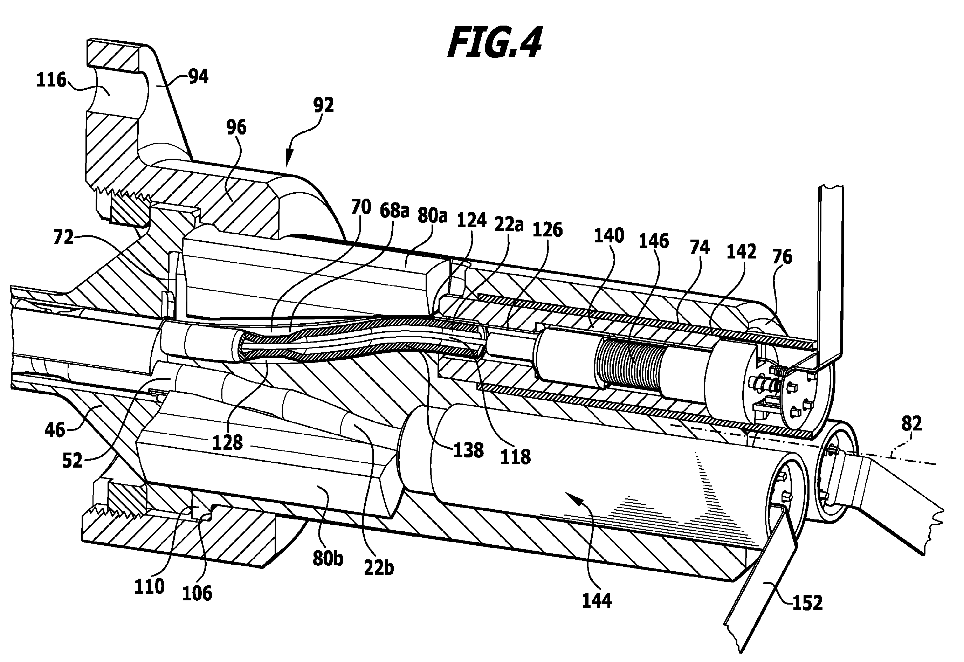

Die Messstrecken 20a, 20b, 20c sind an der Wegstreckeneinrichtung 18 angeordnet. Den Messstrecken 20a, 20b, 20c ist eine jeweilige Messstrecken-Fortsetzung 22a, 22b, 22c zugeordnet, welche in dem Messkopf 16 positioniert ist (Figuren 3, 4).

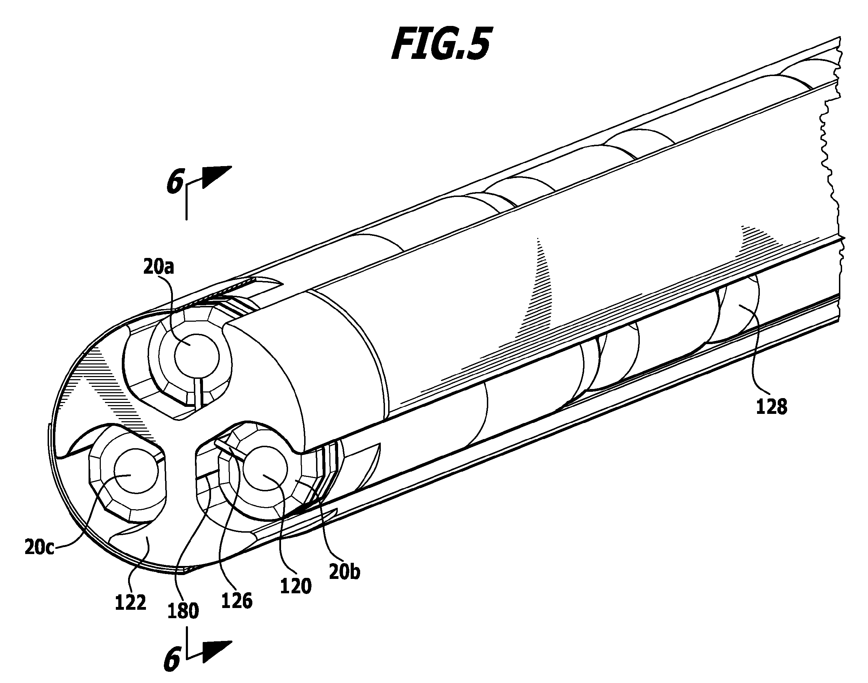

Der Wegaufnehmer 12 weist einen Messstreckenhalter 24 auf. Dieser erstreckt sich in einer Längsrichtung 26 entlang einer entsprechenden Achse. Der Messstreckenhalter 24 weist eine zylindrische Außenkontur (Figuren 5 bis 8) auf. Er ist in einem Schutzrohr angeordnet (in den Zeichnungen nicht gezeigt).

Der Messstreckenhalter 24 erstreckt sich über die gesamte Länge der Messstrecken 20a, 20b, 20c, wobei er eine größere Länge als diese Messstrecken aufweist, wie untenstehend noch näher erläutert wird.

Der Messstreckenhalter 24 weist eine nutförmige erste Ausnehmung 28a für die erste Messstrecke 20a, eine nutförmige zweite Ausnehmung 28b für die zweite Messstrecke 20b und eine nutförmige dritte Ausnehmung 28c für die dritte Messstrecke 20c auf. In diesen Ausnehmungen 28a, 28b, 28c sind die jeweiligen Messstrecken 20a, 20b, 20c angeordnet. Die Ausnehmungen 28a, 28b, 28c erstrecken sich in der Längsrichtung 26 und sind parallel zueinander ausgerichtet und dabei parallel zu der Achse 26 orientiert.

Der Messstreckenhalter 24 ist aus einem faserverstärkten Material und insbesondere faserverstärkten Kunststoffmaterial hergestellt. Bei den Fasern handelt es sich vorzugsweise um Glasfasern. Eine Faserorientierung ist dabei mindestens näherungsweise parallel zu der Längsrichtung 26. Der Messstreckenhalter 24 weist dadurch eine geringe Wärmeausdehnung auf.

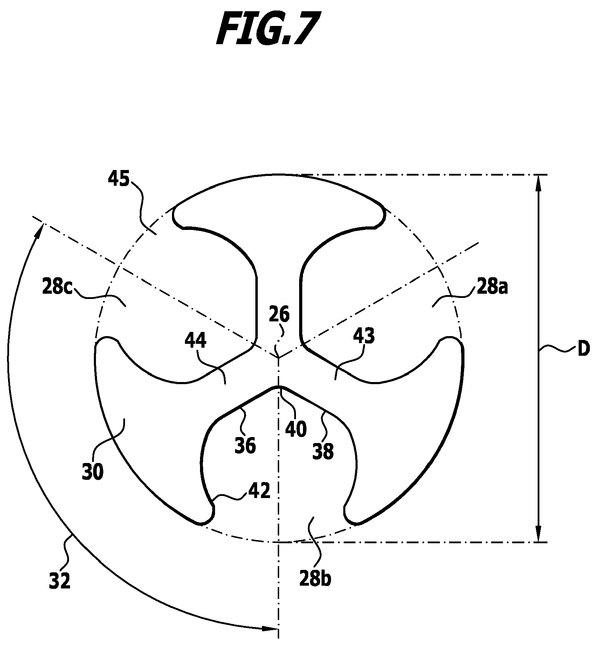

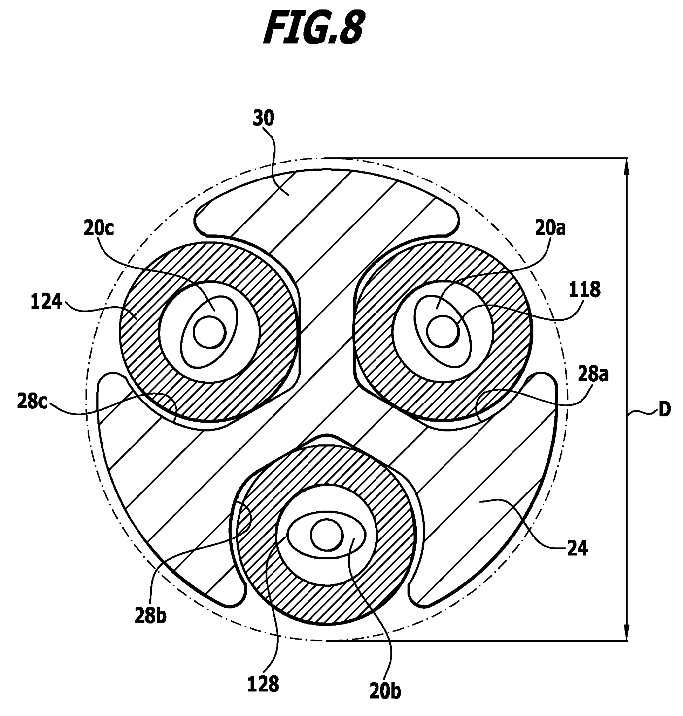

Der Messstreckenhalter 24 ist beispielsweise durch einen Pulltrusionsverfahren hergestellt. Bei einem Ausführungsbeispiel beträgt eine maximale Dicke D (Durchmesser) höchstens 10 mm (siehe Figuren 7 und 8). Bei einem konkreten Ausführungsbeispiel liegt diese Dicke bei ca. 6 mm.

Der Messstreckenhalter 24 weist bezogen auf seinen Querschnitt miteinander verbundene T-förmige Elemente 30 auf (Figuren 7, 8). Diese T-förmigen Elemente 30 sind sternförmig angeordnet. Die T-förmigen Elemente 30 und damit auch die Ausnehmungen 28a, 28b, 28c sind in einem Winkel 32 von 120° rotationssymmetrisch zu der Längsrichtung 26 gleichmäßig verteilt angeordnet. Die T-förmigen Elemente 30 sind gleich ausgebildet.

Die jeweiligen Ausnehmungen 28a usw. sind durch Wände 34 getrennt, welche eine gleichmäßige Wandstärke aufweisen. Die Ausnehmungen 28a usw. sind nicht kreisförmig ausgestaltet. Sie weisen einen ersten Bereich 36 auf, an welchem die begrenzenden Wände 34 mindestens näherungsweise eine ebene Seite 38 haben. Entsprechende ebene Seiten 38 stoßen aufeinander, wobei an dem Übergangsbereich 40 eine Abrundung vorliegt.

Die Ausnehmungen 28a usw. weisen ferner einen zweiten Bereich 42 auf. In diesem sind die Wände 34 bogenförmig ausgestaltet und insbesondere abgerundet.

In einem zentralen Bereich 44 in der Nähe der Achse 26 haben die Wände 34, wie oben erwähnt, eine gleichmäßige Wanddicke.

Die Ausnehmungen 28a usw. weisen eine Öffnung 45 zur Außenseite parallel zur Längsrichtung 26 auf. Die Ausnehmungen 28a usw. sind dadurch als Nuten an dem Messstreckenhalter 24 ausgebildet. Die Wände 34 umgeben dabei die Ausnehmung in einem Winkelbereich von mindestens 220° und beispielsweise in einem Winkelbereich von 270°. Eine an der jeweiligen Ausnehmung 28a usw. angeordnete Messstrecke 20a usw. ist dadurch bis auf die Öffnung 45 von Wandmaterial des Messstreckenhalters 24 umgeben.

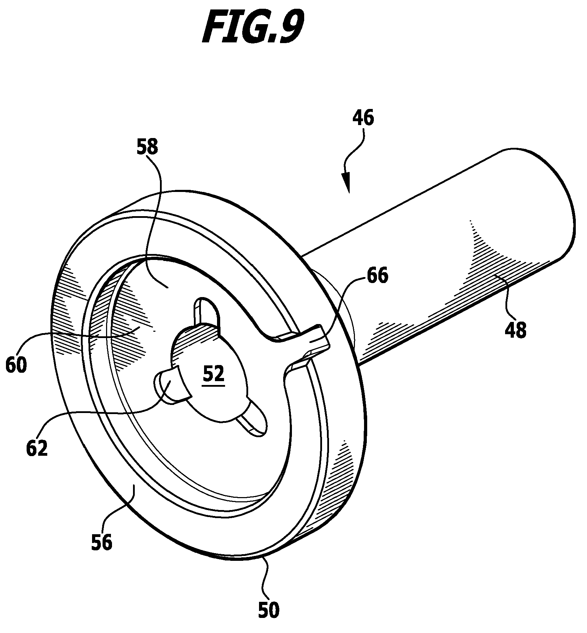

Der Messkopf 16 weist einen Messstreckenhalter-Träger 46 auf, an welchem der Messstreckenhalter 24 gehalten ist (Figuren 1, 2, 9). Dieser Messstreckenhalter-Träger 46 umfasst eine Zylinderhülse 48, welche an einem Topf 50 sitzt. Der Topf 50 hat eine Öffnung 52, welche zu einem Innenraum 54 der Zylinderhülse 48 korrespondiert. Durch diese Öffnung 52 sind die Messstrecken-Fortsetzungen 22a, 22b, 22c durchgeführt. Ferner weist der Topf 50 an seiner der Zylinderhülse 48 abgewandten Seite einen umlaufenden Bund 56 auf. Zwischen einem Boden 58 und dem Bund 56 ist ein zylindrischer Raum 60 definiert.

Um die Öffnung 52 sind an dem Boden 58 in einem Winkel von 120° verteilte Markierungen 62 einer Markierungseinrichtung für den Messstreckenhalter 24 angeordnet. Diese Markierungen 62 entsprechen den Positionen der Messstrecken 20a, 20b, 20c und dienen zur Montageerleichterung.

Der Messstreckenhalter-Träger 46 ist an einem Spulenhalter 64 (Figuren 1, 2, 10) des Messkopfs 16 fixiert, wie unten noch näherstehend erläutert wird. Dem Spulenhalter 64 und dem Messstreckenhalter-Träger 46 ist eine Nase-Nut-Einrichtung zur gegenseitigen Drehfixierung zugeordnet. Dazu ist beispielsweise in dem Bund 56 des Messstreckenhalter-Trägers 46 eine Nut 66 angeordnet.

Der Spulenhalter 64 hat eine zylindrische Gestalt. In ihm sind entsprechend der Anzahl der Messstrecken-Fortsetzungen 22a, 22b, 22c Ausnehmungen 68a, 68b, 68c angeordnet. Die erste Ausnehmung 68a ist dabei der ersten Messstrecken-Fortsetzung 22a zugeordnet, die zweite Ausnehmung 68b ist der zweiten Messstrecken-Fortsetzung 22b zugeordnet und die dritte Ausnehmung 68c ist der dritten Messstrecken-Fortsetzung 22c zugeordnet. Eine jeweilige Ausnehmung 68a usw. weist dabei einen ersten Bereich 70 auf, welcher sich von einer Stirnseite 72 des Spulenhalters 64, welche dem Messstreckenhalter-Träger 46 zugewandt ist, bis zu einem mittleren Bereich des Spulenhalters 64 erstreckt. Weiterhin weist eine Ausnehmung 68a usw. einen zweiten Bereich 74 auf, welcher sich von einem Ende des ersten Bereichs 70 bis zu einer Stirnseite 76 des Spulenhalters 64 erstreckt, welche dem Messstreckenhalter 24 abgewandt ist.

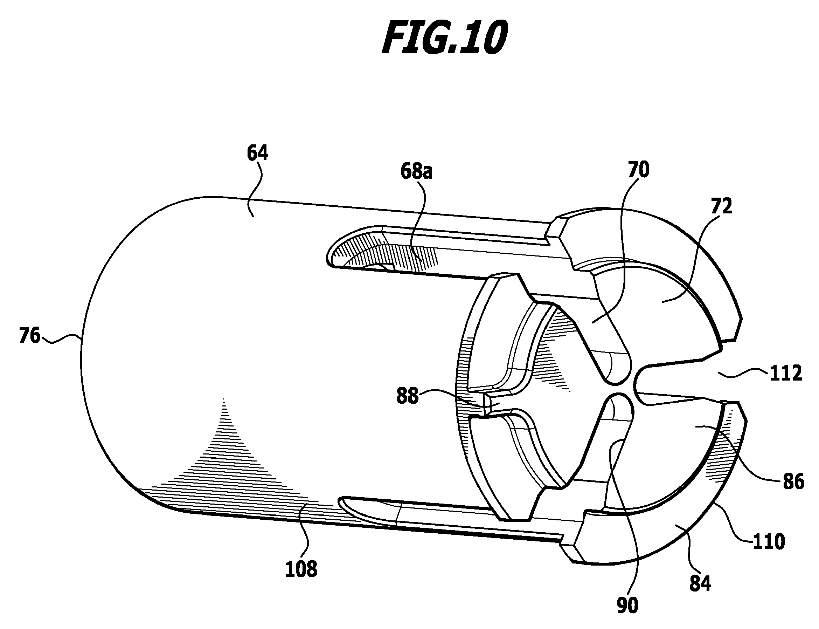

Der zweite Bereich 74 der jeweiligen Ausnehmung 68a usw. ist insbesondere als zylindrische Bohrung in dem Spulenhalter 64 ausgebildet. Der erste Bereich 70 ist als Vertiefung ausgebildet, welche seitlich offen ist (Figur 10). Zum seitlichen Verschließen des ersten Bereichs 70 der Ausnehmungen 68a usw. ist eine Riegeleinrichtung 78 mit jeweiligen Riegeln 80a, 80b, 80c vorgesehen, wobei der Riegel 80a dem ersten Bereich 70 der ersten Ausnehmung 68a, der Riegel 80b dem der zweiten Ausnehmung 68b und der Riegel 80c dem der dritten Ausnehmung 68c zugeordnet ist. Die Riegel 80a, 80b, 80c der Riegeleinrichtung 78 sind an dem ersten Bereich 70 der entsprechenden Ausnehmung 68a, 68b, 68c beispielsweise durch Verklebung fixiert. Sie lassen dabei einen Bereich frei, in welchem die entsprechende Messstrecken-Fortsetzung 22a, 22b, 22c in dem Spulenhalter 64 geführt ist.

Der Messkopf 16 hat eine Achse 82. Diese Achse 82 ist koaxial zur Achse 26 des Messstreckenhalters 24. Der Messstreckenhalter 24 sitzt zentral an dem Messkopf 16. Der Messkopf 16 hat dabei einen größeren Durchmesser als der Messstreckenhalter 24.

Der zweite Bereich 74 der Ausnehmung 68a usw. ist parallel nach außen (von der Achse 82 weg) versetzt und dadurch beabstandet zu der Achse 26. Die Öffnung 52 liegt koaxial zu der Achse 26 und damit auch zu der Achse 82. Der erste Bereich 70 stellt einen Übergangsbereich zwischen der Öffnung 52 und dem parallel versetzten zweiten Bereich 74 bereit. Der erste Bereich 70 ist dabei so ausgestaltet, dass ein kontinuierlicher Übergang erfolgt.

Die Ausnehmungen 68a, 68b, 68c für die Messstrecken-Fortsetzungen 22a, 22b, 22c im Spulenhalter 64 weisen die gleiche Symmetrie der Anordnung wie die Messstrecken 20a, 20b, 20c im Messstreckenhalter 24 auf. Bei dem gezeigten Ausführungsbeispiel sind die Ausnehmungen 68a, 68b, 68c rotationssymmetrisch zu der Achse 82 angeordnet und insbesondere sternförmig angeordnet mit einem Winkelabstand von 120°. Die Ausnehmungen 68a, 68b, 68c sind in ihrem zweiten Bereich 74 parallel zueinander ausgerichtet.

Der Spulenhalter 64 hat an seiner Stirnseite 72 einen zurückgesetzten Randbereich 84, welcher an dem Bund 56 des Messstreckenhalter-Trägers 46 angepasst ist. Der zurückgesetzte Randbereich 84 umgibt eine Erhebung 86, welche in dem Raum 60 positioniert ist. Der Bund 56 umgibt diese Erhebung 86.

An dem Randbereich 84 ist eine Nase 88 der oben erwähnten Nase-Nut-Einrichtung angeordnet. Diese Nase 88 ist in die Nut 66 des Messstreckenhalter-Trägers 46 eingetaucht. Dadurch ist eine relative Drehbarkeit zwischen dem Spulenhalter 64 und dem Messstreckenhalter-Träger 46 gesperrt. Die Nase 88 und die Nut 66 sind dabei so angeordnet, dass die Markierungen 62 auf Eintrittsöffnungen 90 der Ausnehmungen 68a, 68b, 68c ausgerichtet sind.

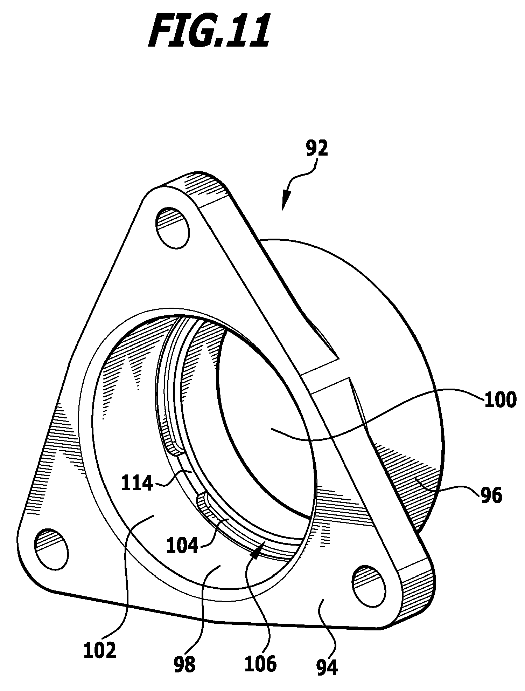

Der Messkopf 16 weist ferner eine Halteplatte 92 auf (Figuren 1, 2, 11). Diese Halteplatte 92 ist an dem Spulenhalter 64 fixiert. Sie weist einen beispielsweise dreieckförmigen ersten Bereich 94 auf (Figur 11), an welchem ein zylindrischer Flansch 96 sitzt. Dieser Flansch 96 ist auf den Spulenhalter 64 aufgesetzt. Ein Teil des Spulenhalters 64 mit der Stirnseite 72 ist durch den Flansch 96 durchgetaucht. Der Flansch 96 umgibt ferner den Messstreckenhalter-Träger 46.

Der Flansch 96 und eine Öffnung 98 in dem ersten Bereich 94 definieren einen Innenraum 100 der Halteplatte 92. In dem Innenraum 100 ist der erwähnte Teil des Spulenhalters 64 sowie ein Teilbereich des Messstreckenhalter-Trägers 46 (nämlich der Topf 50) positioniert. Der Innenraum 100 hat dabei einen ersten Teilbereich 102 und einen zweiten Teilbereich 104. Der erste Teilbereich 102 ist in dem ersten Bereich 94 gebildet und der zweite Teilbereich 104 ist in dem Flansch 96 gebildet. Der zweite Teilbereich 104 weist einen kleineren Durchmesser auf als der erste Teilbereich 102. Dadurch ist eine insbesondere ringförmige Anlagefläche 106 gebildet.

Der Randbereich 84 des Spulenhalters 64 steht nach außen über eine zylindrische Außenkontur 108 des Spulenhalters 64 hervor (Figur 10). Dadurch ist ein Randbund 110 gebildet. Dieser Randbund liegt an der Anlagefläche 106 an. Bei der Herstellung des Wegaufnehmers 12 wird dabei der Spulenhalter 64 mit seiner Stirnseite 76 voraus zuerst durch den ersten Teilbereich 102 des Innenraums 100 durchgeschoben, bis der Randbund 110 an der Anlagefläche 106 anliegt.

Der Randbund 110 des Spulenhalters 64 weist Durchbrechungen 112 auf, welche mit den Ausnehmungen 68a usw. korrespondieren. Diese Durchbrechungen bilden Nuten einer Nase-Nut-Einrichtung zur Drehfixierung des Spulenhalters 64 relativ zu der Halteplatte 92. An der Anlagefläche 106 sind entsprechende Nasen 114 angeordnet. Wenn eine Nase 114 in einer Durchbrechung 112 (Nut) liegt, dann ist die Drehbarkeit zwischen Halteplatte 92 und Spulenhalter 64 gesperrt.

Eine axiale Fixierung zwischen der Halteplatte 92 und dem Spulenhalter 64 des Messkopfs 16 erfolgt beispielsweise durch Verklebung. Die Fixierung des Messkopfs 16 wird durch den insbesondere als Ringmutter ausgebildeten Flansch 96 verbessert. Entsprechend kann eine axiale Fixierung zwischen dem Messstreckenhalter-Träger 46 und dem Spulenhalter 64 ebenfalls durch Verklebung erfolgen.

Bei einer Ausführungsform überdeckt der Flansch 96 mindestens teilweise die Riegeleinrichtung 78.

An dem ersten Bereich 94 der Halteplatte 92 sind bei einer Ausführungsform durchgehende Öffnungen 116 angeordnet. Dadurch lässt sich der Wegaufnehmer 12 beispielsweise an einer Anwendung über Verschraubung oder dergleichen fixieren.

Die jeweiligen Messstrecken 20a, 20b, 20c mit ihren zugeordneten Messstrecken-Fortsetzungen 22a, 22b, 22c umfassen jeweils einen Drahtwellenleiter 118. Dieser Drahtwellenleiter 118 ist die "eigentliche" Messstrecke. Er ist durchgehend in der jeweiligen Messstrecken-Fortsetzung 22a usw. und Messstrecke 20a usw. geführt. Er ist an einer Dämpfungshülse 134 fixiert. Diese Dämpfungshülse 134 ist in der Nähe eines Endes 122 des Messstreckenhalters 24 positioniert. Die Dämpfungshülse 134 ist ein Metallelement.

Der Drahtwellenleiter 118 ist von einem Schlauch 124 umgeben. Dieser Schlauch 124 ist aus einem elektrisch isolierenden Material hergestellt und ist beispielsweise ein Silikonschlauch. Er dient einerseits zur elektrischen Isolierung des Drahtwellenleiters 118 und andererseits zur Lagerung und Positionierung innerhalb der entsprechenden Ausnehmungen 28a usw. und 68a usw.

Mit der Dämpfungshülse 134 ist ein Rückleiter 126 verbunden. Dieser ist beispielsweise an dem Metallelement 134 mit einem Lötpunkt 120 angelötet. Der Rückleiter 126 ist durch die Ausnehmungen 28a usw. und 68a usw. geführt, wobei er außerhalb des entsprechenden Schlauchs 124 liegt.

Der Schlauch 124 ist an beabstandeten Stellen 128 (Figuren 4 bis 6, Figur 8) eingeschnürt und dadurch ist der Bewegungsspielraum des Drahtwellenleiters 118 verringert. Die Einschnürung ist nicht so eng, dass die Wellenpropagation verhindert wird. Dadurch ist eine relative Positionsfixierung des Drahtwellenleiters 118 zu dem Schlauch 124 erreicht. Die relative Positionsfixierung ist eine Lagerung mit (definiertem, geringem) Spiel. Dies wiederum ermöglicht eine Positionsfixierung des Drahtwellenleiters 118 an dem Wegaufnehmer 12, wenn der Schlauch 124 in die Ausnehmungen 28a usw. und 68a usw. eingelegt ist.

In den Ausnehmungen 28a usw. des Messstreckenhalters 24 sind benachbart zu dem Metallelement 134 ein oder mehrere Dämpfungsmassen 130, 132 angeordnet. Eine entsprechende Dämpfungsmasse 130, 132 umgibt in diesem Bereich den Drahtwellenleiter 118 und sorgt für eine Dämpfung der entsprechenden mechanischen Welle.

Zwischen der Dämpfungsmasse 130 und dem Lötpunkt 120 ist die Dämpfungshülse 134 angeordnet.

Ein Messbereich 136 des Wegaufnehmers 12 liegt im Wesentlichen zwischen einem Ende der Dämpfungsmasse 132, an welchem der Schlauch 124 anliegt, und einem Ende der Zylinderhülse 48. Der Abstand dazwischen definiert die Länge des Messbereichs 136.

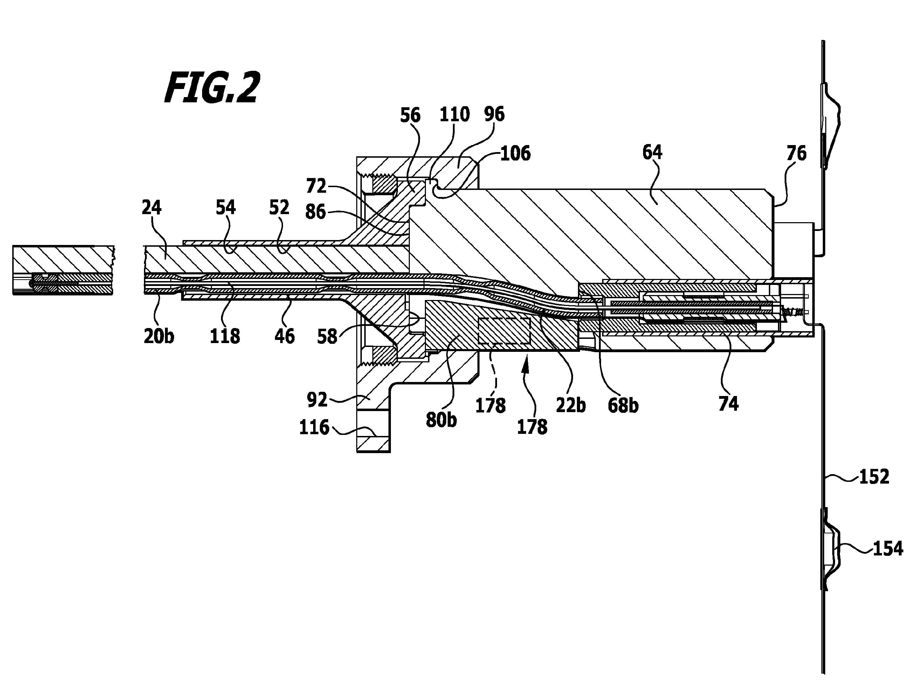

Der Drahtwellenleiter 118 und entsprechend der Rückleiter 126 sind durch die entsprechenden Ausnehmungen 68a usw. auch durch den Spulenhalter 64 geführt (Figuren 2 bis 4). In dem Messstreckenhalter 24 sind die Drahtwellenleiter 118 der jeweiligen Messstrecken 20a, 20b, 20c parallel zueinander und parallel zur Achse geführt. Durch den Durchgang durch den ersten Bereich 70 der Ausnehmungen 68a usw. erfolgt eine querversetzte Anordnung, wobei die Drahtwellenleiter 118 in dem zweiten Bereich 74 wieder parallel zur Achse 26 geführt sind. Der erste Bereich 70 ist so ausgestaltet, dass eine mechanische Welle durch ihn ohne Behinderung laufen kann. Insbesondere ist dazu der Drahtwellenleiter 118 in diesem Bereich gebogen mit der Vermeidung von Ecken geführt. Insbesondere ist der Drahtwellenleiter in der Art einer S-Form geführt.

Die Riegel 80a usw. der Riegeleinrichtung 78 sowie ein Boden 138 des ersten Bereichs 70 der Ausnehmungen 68a usw. sind entsprechend ausgebildet, um eine "kantenfreie" ("stetig differenzierbare") S-förmige Führung des Drahtwellenleiters 118 zu ermöglichen.

In dem zweiten Bereich 74 der jeweiligen Ausnehmungen 68a usw. ist eine Hülse 140 angeordnet. Diese Hülse 140 (Figur 4) dient zur Festlegung der Positionierung des Drahtwellenleiters 118 in diesem zweiten Bereich 74 der Ausnehmung und dadurch zur S-Führung. Die Hülse 140 (Distanzhülse) ist beispielsweise in den entsprechenden zweiten Bereich 74 der Ausnehmungen 68a usw. eingeklebt. Sie ist von einem Abschirmrohr 142 umgeben. Dieses Abschirmohr 142 ist aus einem magnetisch abschirmenden Material hergestellt.

An dem Spulenhalter 64 ist eine Spuleneinrichtung 144 gehalten. Die Spuleneinrichtung 144 umfasst dabei (mindestens) eine Pick-Up-Spule 146, welche an einer Messstrecken-Fortsetzung 22a usw. in dem zweiten Bereich 74 der entsprechenden Ausnehmung 68a usw. angeordnet ist. Die entsprechende Pick-Up-Spule 146 ist insbesondere in die Hülse 140 eingeklebt.

In der Hülse 140 sitzt die Pick-Up-Spule 146 mit Stiften 150a, 150b, 150c, 150d aus metallischem Material. Um den Stift 150a ist der Rückleiter 126 gewickelt und mit diesem verlötet.

Um den Stift 150d ist der Drahtwellenleiter 118 gewickelt.

An den Stiften 150a, 150b, 150c, 150d sitzt jeweils ein Band 152 mit integrierten Leitern. An dem Band 152 wiederum ist (mindestens) jeweils ein Widerstandselement 154 angeordnet. Das Widerstandselement des jeweiligen Bands 152 sitzt dabei außerhalb des Spulenhalters 64. Jeder Messstrecke 20a, 20b, 20c mit ihrer Messstrecken-Fortsetzung 22a, 22b, 22c ist dabei jeweils ein Band mit eigenem Widerstandselement 154 zugeordnet. Ein jeweiliges Band 152 ist insbesondere als Flex-Band ausgebildet. Es führt die Leiter und ist auch ein Träger des Widerstandselements 154. Durch die Widerstandselemente 154 lassen sich die jeweiligen Messstrecken 20a, 20b, 20c in Relation zueinander und auch zu einer nachfolgenden Schaltung normieren. Es lassen sich insbesondere Ungleichheiten im elektrischen Verhalten der einzelnen Messstrecken 20a, 20b, 20c kompensieren. Durch die einfache Zugänglichkeit der Widerstandselemente 154 lässt sich diese Kompensation auf einfache Weise durchführen.

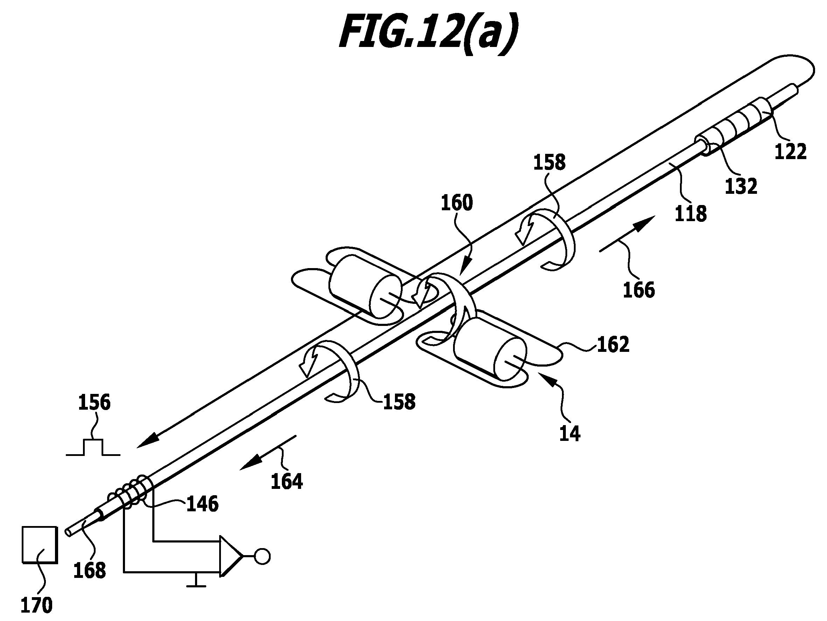

Anhand Figur 12(a) wird schematische die Funktionsweise der Wegmessvorrichtung 10 erläutert:
Ein von einer Messschnittstelle stammender Erregerstrompuls 156 löst als Messsignal eine Messung aus. Der Erregerstromimpuls 156 wird dabei mittels eines Startsignals ausgelöst. Der Erregerstromimpuls 156 erzeugt ein zirkulares Magnetfeld 158, welches aufgrund weichmagnetischer Eigenschaften des Wellenleiters (Drahtwellenleiters) 118 in diesem gebündelt wird. An einer Messstelle 160 des Wellenleiters 118 ist der Positionsgeber 14 (insbesondere Permanentmagnet) positioniert. Dessen Magnetfeldlinien 162 verlaufen rechtwinklig zum zirkularen Magnetfeld 158 und sind ebenfalls im Wellenleiter 118 gebündelt.

In einem Bereich, in welchem sich das zirkulare Magnetfeld 158 und das vom Positionsgeber 14 erzeugte Magnetfeld überlagern, entsteht im Mikrobereich des Gefüges des Wellenleiters 118 eine elastische Verformung aufgrund von Magnetostriktion. Diese elastische Verformung wiederum bewirkt eine sich längs des Wellenleiters 118 in entgegengesetzte Richtungen 164, 166 ausbreitende elastische Welle. Die Ausbreitungsgeschwindigkeit dieser Welle im Wellenleiter 118 liegt insbesondere in der Größenordnung von ca. 2800 m/s und ist weitgehend unempfindlich gegenüber Umwelteinflüssen.

An dem Ende 122 der entsprechenden Messstrecke sind die Dämpfungsmassen 130, 132 angeordnet. Durch diese wird die zu dem Ende 122 laufende transsonare Welle weggedämpft, sodass der rückreflektierte Anteil der Welle bei der Signaldetektion gegenüber der direkt propagierenden Welle vernachlässigbar ist.

Am anderen Ende 168 ist die entsprechende Pick-Up-Spule 146 angeordnet, welche durch Umkehrung des magnetostriktiven Effekts und magnetische Induktion ein elektrisches Signal erzeugt und dieses an die Messschnittstelle liefert.

Die Wellenlaufzeit vom Entstehungsort bis zur Pick-Up-Spule 146 ist direkt proportional zum Abstand zwischen dem Positionsgeber 14 und der Pick-Up-Spule 146. Mittels einer Zeitmessung kann daher der Abstand zwischen der Pick-Up-Spule 146 und dem Positionsgeber 14 mit hoher Genauigkeit bestimmt werden. Das primäre Messsignal für die Zeitmessung ist der Erregerstromimpuls 156, welcher zeitversetzt in Abhängigkeit von dem Abstand zwischen der Pick-Up-Spule 146 und dem Positionsgeber 14 von der Pick-Up-Spule 146 an die Messschnittstelle geliefert wird.

Es ist grundsätzlich so, dass ein Erregerstromimpuls, welcher auf eine Messstrecke (beispielsweise die Messstrecke 20a) gesandt wird, Spannungen in den anderen Messstrecken 20b, 20c induzieren kann, vor allem beim Ausschalten. Es kann also grundsätzlich ein Übersprechen erfolgen.

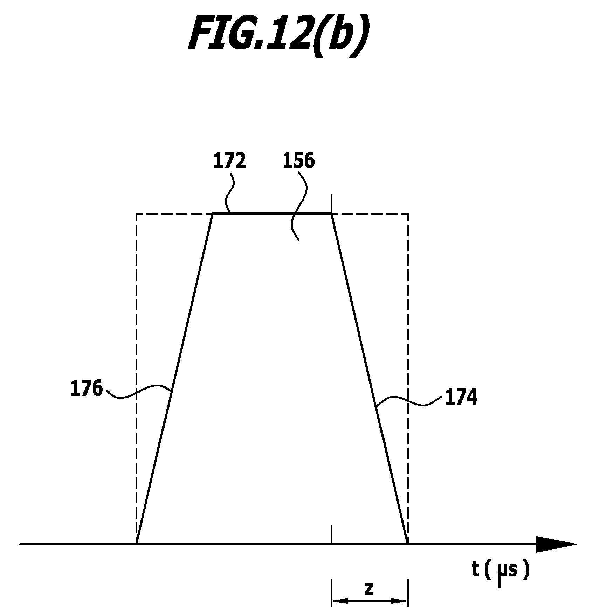

Erfindungsgemäß ist eine Induktionsspannungs-Begrenzungseinrichtung 170 vorgesehen, welche eine Flankensteilheit 172 (Figur 12(b)) eines Erregerstromimpulses 156 insbesondere beim Ausschalten derart einstellt, dass insbesondere ein Abfall von einer maximalen Amplitude 174 auf Null in einem Zeitraum von mindestens 1,5 µs und insbesondere in einem Zeitraum von mindestens 2 µs und insbesondere in einem Zeitraum von mindestens 3 µs erfolgt.

Durch die Einstellung einer entsprechenden Flankensteilheit wird die Größe von induzierten Spannungen reduziert.

Es ist dabei auch möglich, dass eine entsprechende endliche Flankensteilheit 176 beim Einschalten eingestellt wird. Die Induktionsspannungs-Begrenzungseinrichtung 170 ist beispielsweise durch ein RCD-Glied realisiert.

Bei einer Ausführungsform ist in den Spulenhalter 64 eine Magneteinrichtung 178 integriert (Figur 2). Die Magneteinrichtung 178 ist beispielsweise durch Magnete realisiert, welche in die entsprechenden Riegel 80a, 80b, 80c integriert sind. Die Magneteinrichtung 178 ist eine Bias-Magneteinrichtung, welche zum Verringern des Übersprechens zwischen Messstrecken 20a, 20b, 20c bzw. Messstrecken-Fortsetzungen 22a, 22b, 22c dient. Es lässt sich dadurch der Einfluss des Stromimpulses auf einer Messstrecke auf die einer anderen Messstrecke zugeordnete Pick-Up-Spule verringern.

Die Riegel 80a usw. können beispielsweise kunststoffgebundene Magnete sein. Die Ausrichtung und Stärke des Magnetfelds kann gezielt eingestellt werden.

Bei der erfindungsgemäßen Lösung ist es vorgesehen, dass stromführende Leiter exakt parallel geführt werden. Dadurch werden Störfelder, die durch eine verkreuzte Bauweise entstehen können, vermieden.

Im Messkopf 16 ist das Übersprechen aufgrund eines vergrößerten Abstands der Pick-Up-Spulen 146 durch die versetzte Anordnung zu der Achse 26 reduziert.

Bei einer Variante einer Ausführungsform sind in dem Messstreckenhalter 24 und dem Spulenhalter 64 zusätzlich ein oder mehrere Leiter 180 (Figur 5) angeordnet. Ein Leiter 180 ist beispielsweise parallel geführt. Auch eine mäanderartige Führung oder dergleichen ist möglich. Durch einen oder mehrere stromführende Leiter 180 lässt sich bei entsprechender Verlegung des Leiters 180 und Einstellung der Stromstärke ein mögliches Übersprechen zwischen unterschiedlichen Messstrecken 20a, 20b, 20c kompensieren.

Die erfindungsgemäße Wegmessvorrichtung 10 funktioniert wie folgt:
Die Wegmessvorrichtung 10 ist bezüglich ihrer Messstrecken 20a, 20b, 20c redundant. Bei dem beschriebenen Ausführungsbeispiel ist die Wegmessvorrichtung 10 mehrfach redundant, da drei getrennte Messstrecken 20a, 20b, 20c vorgesehen sind. Diese Messstrecken 20a, 20b, 20c sind unabhängig voneinander. Sie ermitteln unabhängig voneinander die Position des Positionsgebers 14.

Durch entsprechende Maßnahmen lässt sich ein Übersprechen reduzieren bzw. verhindern.

Die unterschiedlichen Messstrecken 20a, 20b, 20c sind in den Messstreckenhalter 24 integriert. Dieser lässt sich mit kleinem Bauraum (Durchmesser in der Größenordnung von 7 mm oder kleiner) realisieren.

Der Messstreckenhalter 24 ist aus einem glasfaserverstärkten Kunststoffmaterial hergestellt. Dadurch ist er direkt elektrisch isolierend und weist eine geringe Wärmedehnung auf. Dadurch ist die Zwangsbelastung der Messstrecken stark reduziert.

Die Messstrecken 20a usw. mit ihrer Messstrecken-Fortsetzung 22a usw. sind in einem elektrisch isolierenden Schlauch beispielsweise aus Silikonmaterial angeordnet. Ein entsprechender Schlauch 124 erlaubt eine elektrisch isolierende Lagerung bei hoher Schockbeständigkeit und geringer Schwingungsanfälligkeit.

Der Wellenleiter 118 jeder Messstrecke 20a usw. und Messstrecken-Fortsetzungen 22a usw. ist S-förmig verlegt mit zwei einfachen Biegungen im Spulenhalter 64 (am Übergang zum ersten Bereich 70 und am Übergang vom ersten Bereich 70 zum zweiten Bereich 74). Dies erlaubt eine kompakte Bauweise mit minimaler Störung der Wellenausbreitung.

Auf dem Flex-Band 152 sind entsprechende Widerstandselemente 154 zur Normierung der Messstrecken 20a usw. mit den Messstrecken-Fortsetzungen 22a usw. angeordnet.

Die Abschirmrohre 142 für jede Messstrecke 20a usw. mit Messstrecken-Fortsetzungen 22a usw. liegen vorzugsweise auf eigenem Potential, wobei für jede Messstrecke 20a usw. mit Messstrecken-Fortsetzungen 22a usw. eine eigene magnetische Abschirmung vorgesehen ist.

### Bezugszeichenliste

- 10: Wegmessvorrichtung
- 12: Wegaufnehmer
- 14: Positionsgeber
- 16: Messkopf
- 18: Wegstreckeneinrichtung
- 20a: Erste Messstrecke
- 20b: Zweite Messstrecke
- 20c: Dritte Messstrecke
- 22a: Erste Messstrecken-Fortsetzung
- 22b: Zweite Messstrecken-Fortsetzung
- 22c: Dritte Messstrecken-Fortsetzung
- 24: Messstreckenhalter
- 26: Längsrichtung
- 28a: Erste Ausnehmung
- 28b: Zweite Ausnehmung
- 28c: Dritte Ausnehmung
- 30: T-förmige Elemente
- 32: Winkel
- 34: Wand
- 36: Erster Bereich
- 38: Ebene Seite
- 40: Übergangsbereich
- 42: Zweiter Bereich
- 44: Zentraler Bereich
- 45: Öffnung
- 46: Messstreckenhalter-Träger
- 48: Zylinderhülse
- 50: Topf
- 52: Öffnung
- 54: Innenraum
- 56: Bund
- 58: Boden
- 60: Raum
- 62: Markierung
- 64: Spulenhalter
- 66: Nut
- 68a: Erste Ausnehmung
- 68b: Zweite Ausnehmung
- 68c: Dritte Ausnehmung
- 70: Erster Bereich
- 72: Stirnseite
- 74: Zweiter Bereich
- 76: Stirnseite
- 78: Riegeleinrichtung
- 80a: Riegel
- 80b: Riegel
- 80c: Riegel
- 82: Achse
- 84: Randbereich
- 86: Erhebung
- 88: Nase
- 90: Eintrittsöffnung
- 92: Halteplatte
- 94: Erster Bereich
- 96: Flansch
- 98: Öffnung
- 100: Innenraum
- 102: Erster Teilbereich
- 104: Zweiter Teilbereich
- 106: Anlagefläche
- 108: zylindrische Außenkontur
- 110: Randbund
- 112: Durchbrechung
- 114: Nase
- 116: Öffnung
- 118: Drahtwellenleiter
- 120: Lötpunkt
- 122: Ende
- 124: Schlauch
- 126: Rückleiter
- 128: Stelle
- 130: Dämpfungsmasse
- 132: Dämpfungsmasse
- 134: Dämpfungshülse
- 136: Messbereich
- 138: Boden
- 140: Hülse
- 142: Abschirmrohr
- 144: Spuleneinrichtung
- 146: Pick-Up-Spule
- 150a: Stift
- 150b: Stift
- 150c: Stift
- 150d: Stift
- 152: Band
- 154: Widerstandselement
- 156: Erregerstromimpuls
- 158: Magnetfeld
- 160: Messstelle
- 162: Magnetfeldlinien
- 164: Richtung
- 166: Richtung
- 168: Ende
- 170: Induktionsspannungs-Begrenzungseinrichtung
- 172: Flankensteilheit
- 174: maximale Amplitude
- 176: Flankensteilheit
- 178: Magneteinrichtung
- 180: Leiter

## Patentansprüche

1. Wegmessvorrichtung, umfassend mindestens eine erste Messstrecke (20a) und eine zweite Messstrecke (20b), welche jeweils eine Erstreckung in einer Längsrichtung (26) aufweisen und mindestens in einem Messbereich (136) parallel zueinander ausgerichtet sind, mindestens einen Positionsgeber (14), welcher an die Messstrecken (20a, 20b) berührungslos koppelt und dessen Position in der jeweiligen Längsrichtung mittels der Messstrecken (20a, 20b) erfassbar ist, und einen Messstreckenhalter (24), welcher sich in dem Messbereich (136) erstreckt und Ausnehmungen (28a, 28b; 28c) aufweist, in welchen jeweils eine Messstrecke (20a, 20b) angeordnet ist, **dadurch gekennzeichnet, dass** der Messstreckenhalter (24) bezogen auf seinen Querschnitt T-förmige Elemente (30) aufweist, zwischen welchen die Ausnehmungen (28a; 28b; 28c) gebildet sind.

2. Wegmessvorrichtung nach Anspruch 1, **dadurch gekennzeichnet, dass** ein Wellenleiter (118) in einem Schlauch (124) und insbesondere Silikonschlauch angeordnet ist und insbesondere, dass an beabstandeten Stellen (128) der Schlauch (124) eingeschnürt ist.

3. Wegmessvorrichtung nach einem der vorangehenden Ansprüche,
**dadurch gekennzeichnet, dass** der Messstreckenhalter (24) aus einem faserverstärkten Material und insbesondere glasfaserverstärkten Material hergestellt ist und insbesondere **gekennzeichnet durch** eine Faserorientierung mindestens näherungsweise parallel zu einer Längsrichtung (26) einer Messstrecke (20a; 20b; 20c).

4. Wegmessvorrichtung nach einem der vorangehenden Ansprüche,
**dadurch gekennzeichnet, dass** die Ausnehmungen (28a, 28b, 28c) am Messstreckenhalter (24) rotationssymmetrisch zu einer Längsachse (26) des Messstreckenhalters (24) verteilt angeordnet sind und/oder dass eine Ausnehmung (28a; 28b; 28c) an dem Messstreckenhalter (24) seitlich offen ist und/oder dass eine Messstrecke (20a; 20b; 20c) in einer Ausnehmung (28a; 28b; 28c) in einem Winkel (32) von mindestens 220° und vorzugsweise in einem Winkel (32) von mindestens näherungsweise 270° von Wandmaterial der Ausnehmung (28a; 28b; 28c) umgeben ist.

5. Wegmessvorrichtung nach einem der vorangehenden Ansprüche,
**dadurch gekennzeichnet, dass** eine Messstrecke (20a; 20b; 20c) über ihre gesamte Länge im Messbereich (136) von dem Messstreckenhalter (24) aufgenommen ist.

6. Wegmessvorrichtung nach einem der vorangehenden Ansprüche,
**dadurch gekennzeichnet, dass** der Messstreckenhalter (24) eine zylindrische Außenkontur (108) hat.

7. Wegmessvorrichtung nach einem der vorangehenden Ansprüche,
**dadurch gekennzeichnet, dass** die T-förmigen Elemente (30) sternförmig angeordnet sind.

8. Wegmessvorrichtung nach einem der vorangehenden Ansprüche,
**dadurch gekennzeichnet, dass** eine Ausnehmung (28a; 28b; 28c) einen ersten Bereich (36) aufweist, in welchem begrenzende Wände (34) mindestens näherungsweise eine ebene Seite (38) haben und insbesondere, dass eine Ausnehmung (28a; 28b; 28c) einen zweiten Bereich (42) aufweist, in welchem die Ausnehmung (28a; 28b; 28c) begrenzende Wände (34) abgerundet sind.

9. Wegmessvorrichtung nach einem der vorangehenden Ansprüche,
**dadurch gekennzeichnet, dass** der Messstreckenhalter (24) einen zentralen Bereich aufweist, in welchem die Ausnehmungen (28a; 28b; 28c) begrenzenden Wände (34) eine gleichmäßige Wanddicke haben.

10. Wegmessvorrichtung nach einem der vorangehenden Ansprüche,
**dadurch gekennzeichnet, dass** die Messstrecken (20a; 20b; 20c) unabhängig voneinander sind und gleichzeitig an den gleichen mindestens einen Positionsgeber (14) koppeln.

11. Wegmessvorrichtung nach einem der vorangehenden Ansprüche,
**gekennzeichnet durch** einen Messkopf (16), an welchem der Messstreckenhalter (24) angeordnet ist und insbesondere koaxial angeordnet ist und insbesondere, dass die Messstrecken (20a; 20b; 20c) jeweils eine Fortsetzung (22a; 22b; 22c) in den Messkopf (16) aufweisen und insbesondere, dass der Messkopf (16) größere Querschnittsabmessungen aufweist als der Messstreckenhalter (24) und insbesondere, dass an dem Messkopf (16) eine Halteeinrichtung (92) zur Fixierung der Wegmessvorrichtung an einer Anwendung angeordnet ist und insbesondere, dass an dem Messkopf (16) eine Spuleneinrichtung (144) angeordnet ist, wobei jeder Messstrecke (20a; 20b; 20c) jeweils mindestens eine Pick-Up-Spule (146) zugeordnet ist und insbesondere, dass ein Bereich einer Fortsetzung (22a; 22b; 22c) der Messstrecke in dem Messkopf (16), welche an die Spuleneinrichtung (144) gekoppelt ist, nach außen versetzt zu einer Längsachse (26) des Messstreckenhalters (24) positioniert ist und insbesondere, dass dieser Bereich der Fortsetzung (22a; 22b; 22c) mindestens näherungsweise linear ausgerichtet ist und insbesondere, dass die Fortsetzung (22a; 22b; 22c) der Messstrecke einen Übergangsbereich zwischen dem Messstreckenhalter (24) und der Spuleneinrichtung (144) aufweist und insbesondere dass die Fortsetzung (22a; 22b; 22c) im Übergangsbereich gebogen geführt ist und insbesondere, dass die Pick-Up-Spulen (146), welche den jeweiligen Messstrecken (20a; 20b; 20c) zugeordnet sind, rotationssymmetrisch zu einer Achse (82) des Messkopfs (16) verteilt angeordnet sind und insbesondere, dass der mindestens einen Pick-Up-Spule (146) der jeweiligen Messstrecke (20a; 20b; 20c) jeweils mindestens ein Widerstandselement (154) zugeordnet ist und insbesondere, dass das mindestens eine Widerstandselement (154) auf einem flexiblen Band (152) angeordnet ist und insbesondere außerhalb des Messkopfs (16) angeordnet ist und insbesondere, dass der Messkopf (16) einen Spulenhalter (64) aufweist, an welchem ein Messstreckenhalter-Träger (46) fixiert ist und insbesondere, dass der Messstreckenhalter-Träger (46) eine Markierungseinrichtung (62) und/oder Positioniereinrichtung für den Messstreckenhalter (24) aufweist und insbesondere, dass dem Messstreckenhalter-Träger (46) und dem Spulenhalter (64) eine Nase-Nut-Einrichtung zur Drehfixierung aneinander zugeordnet ist und insbesondere, dass an dem Spulenhalter (64) eine Halteeinrichtungs-Platte (92) fixiert ist und insbesondere, dass der Halteeinrichtungs-Platte (92) und dem Spulenhalter (64) eine Nase-Nut-Einrichtung zur Drehfixierung zugeordnet ist und insbesondere **gekennzeichnet durch** eine Riegeleinrichtung (78), welche einen einer jeweiligen Messstrecken-Fortsetzung (22a; 22b; 22c) zugeordneten Riegel (80a; 80b; 80c) umfasst, welcher an einem Spulenhalter (64) angeordnet ist und die Fortsetzung (22a; 22b; 22c) der Messstrecke im Spulenhalter (64) fixiert und insbesondere, dass eine Magneteinrichtung (178) in die Riegeleinrichtung (78) integriert ist.

12. Wegmessvorrichtung nach einem der vorangehenden Ansprüche,
**dadurch gekennzeichnet, dass** die Messstrecken (20a; 20b; 20c) individuell elektrisch isoliert sind.

13. Wegmessvorrichtung nach einem der vorangehenden Ansprüche,
**dadurch gekennzeichnet, dass** jeder Messstrecke (20a; 20b; 20c) eine eigene magnetische Abschirmung (142) zugeordnet ist.

14. Wegmessvorrichtung nach einem der vorangehenden Ansprüche,
**dadurch gekennzeichnet, dass** eine Pick-Up-Spuleneinrichtung (146), welche einer jeweiligen Messstrecke (20a; 20b; 20c) zugeordnet ist, jeweils eine eigene magnetische Abschirmung (142) aufweist und insbesondere, dass jede magnetische Abschirmung (142) auf einem eigenen Potential liegt.

15. Wegmessvorrichtung nach einem der vorangehenden Ansprüche,
**dadurch gekennzeichnet, dass** in dem Messstreckenhalter (24) mindestens ein zusätzlicher Leiter (180) angeordnet ist.

16. Wegmessvorrichtung nach einem der vorangehenden Ansprüche,
**gekennzeichnet durch** eine Ausbildung als magnetostriktive Wegmessvorrichtung.

## Claims

1. Path measuring apparatus, comprising at least a first measuring path (20a) and a second measuring path (20b), these measuring paths (20a, 20b) each having an extension in a longitudinal direction (26) and being oriented parallel to one another in at least a measuring range (136), at least one position indicator (14) which couples to the measuring paths (20a, 20b) in a non-contact manner and whose position is detectable by way of the measuring paths (20a, 20b) in the respective longitudinal direction, and a measuring path holder (24) which extends in the measuring range (136) and has recesses (28a, 28b; 28c), each recess (28a, 28b; 28c) having a measuring path (20a, 20b) arranged therein, **characterized in that** the measuring path holder (24) has T-shaped elements (30) relative to its cross-section, said T-shaped elements (30) having the recesses (28a; 28b; 28c) formed therebetween.

2. Path measuring apparatus in accordance with claim 1, **characterized in that** a waveguide (118) is arranged in a flexible tube (124), in particular a flexible silicone tube, and **characterized in** particular **in that** the flexible tube (124) is constricted at locations (128) thereof spaced apart from one another.

3. Path measuring apparatus in accordance with any one of the preceding claims, **characterized in that** the measuring path holder (24) is made of a fibre-reinforced material, in particular of a fibreglass-reinforced material, and **characterized in** particular by a fibre orientation that is at least approximately parallel to a longitudinal direction (26) of a measuring path (20a; 20b; 20c).

4. Path measuring apparatus in accordance with any one of the preceding claims, **characterized in that** the recesses (28a, 28b, 28c) on the measuring path holder (24) are arranged in a rotationally symmetrically distributed manner about a longitudinal axis (26) of the measuring path holder (24) and/or **characterized in that** a recess (28a; 28b; 28c) on the measuring path holder (24) is laterally open and/or **characterized in that** a measuring path (20a; 20b; 20c) in a recess (28a; 28b; 28c) is surrounded by wall material of the recess (28a; 28b; 28c) at an angle (32) of at least 220° and preferably at an angle (32) of at least approximately 270°.

5. Path measuring apparatus in accordance with any one of the preceding claims, **characterized in that** a measuring path (20a; 20b; 20c) is received over its entire length in the measuring range (136) by the measuring path holder (24).

6. Path measuring apparatus in accordance with any one of the preceding claims, **characterized in that** the measuring path holder (24) has a cylindrical outer contour (108).

7. Path measuring apparatus in accordance with any one of the preceding claims, **characterized in that** the T-shaped elements (30) are arranged in a star-shaped manner.

8. Path measuring apparatus in accordance with any one of the preceding claims, **characterized in that** a recess (28a; 28b; 28c) has a first region (36) in which confining walls (34) have an at least approximately flat side (38) and **characterized in** particular **in that** a recess (28a; 28b; 28c) has a second region (42) in which walls (34) confining the recess (28a; 28b; 28c) are rounded.

9. Path measuring apparatus in accordance with any one of the preceding claims, **characterized in that** the measuring path holder (24) has a central region in which walls (34) confining the recesses (28a; 28b; 28c) are of uniform wall thickness.

10. Path measuring apparatus in accordance with any one of the preceding claims, **characterized in that** the measuring paths (20a; 20b; 20c) are independent of one another and simultaneously couple to the same at least one position indicator (14).

11. Path measuring apparatus in accordance with any one of the preceding claims, **characterized by** a measuring head (16) which has the measuring path holder (24) arranged thereon and in particular coaxially arranged thereon and **characterized in** particular **in that** the measuring paths (20a; 20b; 20c) each have a continuation (22a; 22b; 22c) into the measuring head (16) and **characterized in** particular **in that** the measuring head (16) has cross-sectional dimensions larger than that of the measuring path holder (24) and **characterized in** particular **in that** the measuring head (16) has arranged thereon a holding device (92) for fixing the path measuring apparatus to an application and **characterized in** particular **in that** a coil device (144) is arranged on the measuring head (16), with each measuring path (20a; 20b; 20c) having at least one pickup coil (146) associated with it, and **characterized in** particular in that an area of a continuation (22a; 22b; 22c) of the measuring path within the measuring head (16) that is coupled to the coil device (144) is positioned outwardly offset with respect to a longitudinal axis (26) of the measuring path holder (24) and **characterized in** particular **in that** said area of the continuation (22a; 22b; 22c) is at least approximately linearly oriented and **characterized in** particular **in that** the continuation (22a; 22b; 22c) of the measuring path has a transition region between the measuring path holder (24) and the coil device (144) and in particular **in that** the continuation (22a; 22b; 22c) in the transition region is routed in a bent path and **characterized in** particular **in that** the pickup coils (146), which are associated with the respective measuring paths (20a; 20b; 20c), are arranged in a rotationally symmetrically distributed manner about an axis (82) of the measuring head (16) and **characterized in** particular **in that** the at least one pickup coil (146) of the respective measuring path (20a; 20b; 20c) has in each case at least one resistor element (154) associated with it and **characterized in** particular **in that** the at least one resistor element (154) is arranged on a flexible tape (152) and is in particular arranged external to the measuring head (16) and **characterized in** particular **in that** the measuring head (16) has a coil holder (64) to which is fixed a measuring path holder carrier (46) and **characterized in** particular **in that** the measuring path holder carrier (46) has a marking device (62) and/or positioning device for the measuring path holder (24) and **characterized in** particular **in that** the measuring path holder carrier (46) and the coil holder (64) have associated therewith a lug-and-groove device for rotational fixing one to the other and **characterized in** particular **in that** a holding device plate (92) is fixed to the coil holder (64) and **characterized in** particular **in that** the holding device plate (92) and the coil holder (64) have associated therewith a lug-and-groove device for rotational fixing and **characterized in** particular by a latch device (78) comprising a latch (80a; 80b; 80c) associated with a respective measuring path continuation (22a; 22b; 22c), said latch (80a; 80b; 80c) being arranged on a coil holder (64) and fixing the continuation (22a; 22b; 22c) of the measuring path in the coil holder (64) and **characterized in** particular **in that** a magnet device (178) is integrated in the latch device (78).

12. Path measuring apparatus in accordance with any one of the preceding claims, **characterized in that** the measuring paths (20a; 20b; 20c) are individually electrically isolated.

13. Path measuring apparatus in accordance with any one of the preceding claims, **characterized in that** each measuring path (20a; 20b; 20c) has a magnetic shield (142) of its own associated with it.

14. Path measuring apparatus in accordance with any one of the preceding claims, **characterized in that** a pickup coil device (146) which is associated with a respective measuring path (20a; 20b; 20c) has in each case a magnetic shield (142) of its own and **characterized in** particular **in that** each magnetic shield (142) is at its own potential.

15. Path measuring apparatus in accordance with any one of the preceding claims, **characterized in that** the measuring path holder (24) has at least one additional conductor (180) arranged therein.

16. Path measuring apparatus in accordance with any one of the preceding claims, **characterized by** being configured as a magnetostrictive path measuring apparatus.

## Revendications

1. Dispositif de mesure de déplacement, comprenant au moins un premier tronçon de mesure (20a) et un deuxième tronçon de mesure (20b), qui présentent respectivement une extension dans une direction longitudinale (26) et qui sont orientés au moins dans une zone de mesure (136) de manière parallèle l'un par rapport à l'autre, au moins un capteur de position (14) qui est couplé sans contact aux tronçons de mesure (20a, 20b) et dont la position peut être détectée dans la direction longitudinale respective au moyen des tronçons de mesure (20a, 20b), et un support de tronçon de mesure (24) qui s'étend dans la zone de mesure (136) et qui présente des évidements (28a, 28b ; 28c), dans lesquels respectivement un tronçon de mesure (20a, 20b) est disposé, **caractérisé en ce que** le support de tronçon de mesure (24) présente des éléments (30) en forme de T par rapport à sa section transversale, entre lesquels les évidements (28a ; 28b ; 28c) sont formés.

2. Dispositif de mesure de déplacement selon la revendication 1, **caractérisé en ce qu'**un guide d'ondes (118) est disposé dans un tuyau (124) et en particulier dans un tuyau en silicone, et en particulier **en ce que** le tuyau (124) est ligaturé au niveau d'emplacements (128) espacés.

3. Dispositif de mesure de déplacement selon l'une quelconque des revendications précédentes, **caractérisé en ce que** le support de tronçon de mesure (24) est fabriqué à partir d'un matériau renforcé par des fibres et en particulier à partir d'un matériau renforcé par des fibres de verre, et caractérisé en particulier par une orientation des fibres au moins approximativement de manière parallèle par rapport à une direction longitudinale (26) d'un tronçon de mesure (20a ; 20b ; 20c).

4. Dispositif de mesure de déplacement selon l'une quelconque des revendications précédentes, **caractérisé en ce que** les évidements (28a, 28b, 28c) sont disposés de manière répartie au niveau du support de tronçon de mesure (24) de manière symétrique en rotation par rapport à un axe longitudinal (26) du support de tronçon de mesure (24), et/ou **en ce qu'**un évidement (28a ; 28b ; 28c) au niveau du support de tronçon de mesure (24) est ouvert latéralement, et/ou en ce qu'un tronçon de mesure (20a ; 20b ; 20c) dans un évidement (28a ; 28b ; 28c) est entouré d'un matériau de paroi de l'évidement (28a ; 28b ; 28c) selon un angle (32) d'au moins 220° et de préférence selon un angle (32) d'au moins approximativement 270°.

5. Dispositif de mesure de déplacement selon l'une quelconque des revendications précédentes, **caractérisé en ce qu'**un tronçon de mesure (20a ; 20b ; 20c) est reçu par le support de tronçon de mesure (24) sur toute sa longueur dans la zone de mesure (136).

6. Dispositif de mesure de déplacement selon l'une quelconque des revendications précédentes, **caractérisé en ce que** le support de tronçon de mesure (24) a un contour extérieur (108) cylindrique.

7. Dispositif de mesure de déplacement selon l'une quelconque des revendications précédentes, **caractérisé en ce que** les éléments (30) en forme de T sont disposés de manière à présenter une forme d'étoile.

8. Dispositif de mesure de déplacement selon l'une quelconque des revendications précédentes, **caractérisé en ce qu'**un évidement (28a ; 28b ; 28c) présente une première zone (36), dans laquelle des parois (34) de délimitation ont au moins approximativement un côté (38) plan, et en particulier **en ce qu'**un évidement (28a ; 28b ; 28c) présente une deuxième zone (42), dans laquelle des parois (34) délimitant l'évidement (28a ; 28b ; 28c) sont arrondies.

9. Dispositif de mesure de déplacement selon l'une quelconque des revendications précédentes, **caractérisé en ce que** le support de tronçon de mesure (24) présente une zone centrale, dans laquelle les parois (34) délimitant des évidements (28a ; 28b ; 28c) ont une épaisseur de paroi régulière.

10. Dispositif de mesure de déplacement selon l'une quelconque des revendications précédentes, **caractérisé en ce que** les tronçons de mesure (20a ; 20b ; 20c) sont indépendants les uns des autres et sont couplés dans le même temps à l'au moins un même capteur de position(14).

11. Dispositif de mesure de déplacement selon l'une quelconque des revendications précédentes, **caractérisé par** une tête de mesure (16), au niveau de laquelle le support de tronçon de mesure (24) est disposé, en particulier de manière coaxiale, et en particulier en ce que les tronçons de mesure (20a ; 20b ; 20c) présentent respectivement un prolongement (22a ; 22b ; 22c) dans la tête de mesure (16), et en particulier en ce que la tête de mesure (16) présente des dimensions de section transversale plus grandes que le support de tronçon de mesure (24), et en particulier en ce qu'un système de maintien (92) servant à fixer le dispositif de mesure de déplacement à une application est disposé au niveau de la tête de mesure (16), et en particulier en ce qu'un système de bobine (144) est disposé au niveau de la tête de mesure (16), dans lequel respectivement au moins une bobine de captation (146) est associée à chaque tronçon de mesure (20a ; 20b ; 20c), et en particulier en ce qu'une zone d'un prolongement (22a ; 22b ; 22c) du tronçon de mesure est positionnée dans la tête de mesure (16), lequel tronçon de mesure est couplé au système de bobine (144), de manière décalée vers l'extérieur par rapport à un axe longitudinal (26) du support de tronçon de mesure (24), et en particulier en ce que ladite zone du prolongement (22a ; 22b ; 22c) est orientée au moins approximativement de manière linéaire, et en ce particulier en ce que le prolongement (22a ; 22b ; 22c) du tronçon de mesure présente une zone de transition entre le support de tronçon de mesure (24) et le système de bobine (144), et en particulier en ce que le prolongement (22a ; 22b ; 22c) est guidée de manière cintrée dans la zone de transition, et en particulier en ce que les bobines de captation (146), qui sont associées aux tronçons de mesure (20a ; 20b ; 20c) respectifs, sont disposées de manière répartie de manière symétrique en rotation par rapport à un axe (82) de la tête de mesure (16), et en particulier que respectivement au moins un élément de résistance (154) est associé à l'au moins une bobine de captation (146) du tronçon de mesure (20a ; 20b ; 20c) respectif, et en particulier en ce que l'au moins un élément de résistance (154) est disposé sur une bande (152) flexible et est disposé en particulier en dehors de la tête de mesure (16), et en particulier en ce que la tête de mesure (16) présente un support de bobine (64), au niveau duquel un porte-support de tronçon de mesure (46) est fixé, et en particulier en ce que le porte-support de tronçon de mesure(46) présente un système de marquage (62) et/ou un système de positionnement pour le support de tronçon de mesure (24), et en particulier en ce qu'un système ergot-rainure servant à la fixation en rotation est associé au porte-support de tronçon de mesure (46) et au support de bobine (64), et en particulier en ce qu'une plaque de système de maintien (92) est fixée au niveau du support de bobine (64), et en particulier en ce qu'un système ergot-rainure servant à la fixation en rotation est associé à la plaque de système de maintien (92) et au support de bobine (64), et en particulier **caractérisé par** un système à verrou (78), qui comprend un verrou (80a ; 80b ; 80c) associé à un prolongement de tronçon de mesure (22a ; 22b ; 22c) respectif, lequel verrou est disposé au niveau d'un support de bobine (64) et fixe, dans le support de bobine (64), le prolongement (22a ; 22b ; 22c) du tronçon de mesure, et en particulier en ce qu'un système magnétique (178) est intégré dans le système à verrou (78).

12. Dispositif de mesure de déplacement selon l'une quelconque des revendications précédentes, **caractérisé en ce que** les tronçons de mesure (20a ; 20b ; 20c) sont isolés individuellement de manière électrique.

13. Dispositif de mesure de déplacement selon l'une quelconque des revendications précédentes, **caractérisé en ce qu'**un blindage (142) magnétique propre est associé à chaque tronçon de mesure (20a ; 20b ; 20c).

14. Dispositif de mesure de déplacement selon l'une quelconque des revendications précédentes, **caractérisé en ce qu'**un système de bobine de captation (146), qui est associé à un tronçon de mesure (20a ; 20b ; 20c) respectif, présente respectivement un blindage (142) magnétique propre, et en particulier **en ce que** chaque blindage (142) magnétique se situe sur un potentiel propre.

15. Dispositif de mesure de déplacement selon l'une quelconque des revendications précédentes, **caractérisé en ce qu'**au moins un guide (180) supplémentaire est disposé dans le support de tronçon de mesure (24).

16. Dispositif de mesure de déplacement selon l'une quelconque des revendications précédentes, **caractérisé par** une réalisation sous la forme d'un dispositif de mesure de déplacement magnétostrictif.
